# EUROPÄISCHE PATENTSCHRIFT

(11) **EP 4 013 927 B1**
(45) Veröffentlichungstag und Bekanntmachung des Hinweises auf die Patenterteilung: **12.02.2025**
(21) Anmeldenummer: 20757847.7
(22) Anmeldetag: 11.08.2020
(51) Int. Cl.: E04H 12/34, E04H 12/16, B66C 1/10, B66C 23/20, F03D 13/20

(54) **MONTAGETRAVERSE UND VERFAHREN ZUM EINZIEHEN VON KABELFÖRMIGEN ELEMENTEN, INSBESONDERE VON SPANNGLIEDERN, ENTLANG EINES TURMS EINER WINDENERGIEANLAGE**
ASSEMBLY CROSSBEAM AND METHOD FOR DRAWING IN CABLE-LIKE ELEMENTS, IN PARTICULAR TENDONS, ALONG A TOWER OF A WIND TURBINE
TRAVERSE D'ASSEMBLAGE ET PROCÉDÉ D'ÉTIRAGE D'ÉLÉMENTS DE TYPE CÂBLE, EN PARTICULIER DE TENDONS, LE LONG D'UNE TOUR D'UNE ÉOLIENNE

(30) Priorität: 15.08.2019 DE 102019122021
(43) Veröffentlichungstag der Anmeldung: 22.06.2022
(73) Patentinhaber: Wobben Properties GmbH, 26607 Aurich (DE)
(72) Erfinder: COORDES, Thomas, 26632 Ihlow (DE); FLESSNER, Günter, 26605 Aurich (DE); SZELAG, Michael, 22339 Hamburg (DE)
(74) Vertreter: Eisenführ Speiser
(86) Internationale Anmeldenummer: PCT/EP2020/072520
(87) Internationale Veröffentlichungsnummer: WO 2021/028441

(56) Entgegenhaltungen:
- WO-A1-2011/154110
- WO-A2-2010/147459
- DE-A1- 102014 218 073
- DE-A1- 102017 203 645
- US-A1- 2017 183 872

## Beschreibung

Die Erfindung betrifft eine Montagetraverse zum Aufsetzen auf einen Turmkopf, insbesondere auf einen Turmkopf eines Turms einer Windenergieanlage und ein Verfahren zum Einziehen von kabelförmigen Elementen, insbesondere von Spanngliedern, entlang eines Turms, insbesondere eines Turms einer Windenergieanlage.

In Betonbauwerken, die unter hoher Belastung stehen, werden häufig Spannglieder eingesetzt, um die Bauwerke vorzuspannen. Dabei kommen insbesondere auch extern geführte Spannglieder zum Einsatz, die nicht innerhalb von Betonbauteilen, beispielsweise im Inneren von einbetonierten Hüllrohren, verlaufen, sondern angrenzend oder benachbart zu den Betonbauteilen verlaufen. Insbesondere bei Türmen, die aus Beton bestehen oder Beton aufweisen, kommen extern geführte Spannglieder zum Einsatz. Beispielsweise können Türme aus Ortbeton hergestellt werden oder aus Betonfertigteilen zusammengesetzt werden. Spannglieder kommen bei solchen Betontürmen oft zum Einsatz, um den Turm in Längsrichtung vorzuspannen.

Neben Spanngliedern sind in Türmen auch andere kabelförmige Elemente, wie beispielsweise elektrische Leitungen, entlang des Turms, insbesondere in vertikaler Richtung, beispielsweise vom Turmfuß zum Turmkopf, zu verlegen bzw. einzuziehen. Insbesondere bei Türmen von Windenergieanlagen können die entlang des Turms zu verlegenden kabelförmigen Elemente große Querschnitte und/oder hohe Gewichte aufweisen, so dass zum Einziehen in der Regel ein entsprechend hoher (und damit teurer) Kran erforderlich ist.

Zum Vorspannen von Betontürmen werden die Enden der Spannglieder in der Regel am Turmkopf und am Turmfundament fixiert, was meist über Ankervorrichtungen erfolgt, und Geänderte Beschreibungsseiten (Reinschrift)
dann mit einer entsprechenden Vorspannkraft versehen. Bei Türmen mit ringförmigem Querschnitt sind oft auch die extern geführten Spannglieder ringförmig angeordnet und verlaufen meist im Inneren des Turms. Die Spannglieder sind dann in der Regel vom Inneren des Turms aus zugänglich.

Vorgespannte Betontürme kommen häufig bei Windenergieanlagen zum Einsatz. Hierbei wird eine Gondel mit einem aerodynamischen Rotor auf den Turm aufgesetzt.

Das Vorspannen der Spannglieder am Turmfuß erfordert eine entsprechende Arbeitshöhe zum Ansetzen und Handhaben einer Spannpresse, was in der Regel dazu führt, dass im Turmfundament eine entsprechende Tiefe bei der Konstruktion berücksichtigt werden muss. Dies kann zu aufwändigen, teuren und großen Fundamentkonstruktionen führen. Das Vorspannen der Spannglieder am Turmkopf erfordert das Verbringen einer Spannpresse an den Turmkopf und das Ansetzen und Handhaben der Spannpresse auf großer Höhe. Dies ist ebenfalls aufwändig und aufgrund der Durchführung der Arbeiten auf großer Höhe mit hohen Anforderungen an die Arbeitssicherheit verbunden.

Das Deutsche Patent- und Markenamt hat in der Prioritätsanmeldung zur vorliegenden Anmeldung folgenden Stand der Technik recherchiert: DE 10 2011 003 164 A1, US 2017/0 183 872 A1, WO 2010/ 147 459 A2, DE 10 2017 203 645 A1, DE 10 2018 105 276 A1.

Eine weitere Montagetraverse gemäß dem Stand der Technik wird in der WO 2011/ 154 110 A1 beschrieben.

Es ist daher eine Aufgabe der vorliegenden Erfindung, eine verbesserte Montagetraverse zum Aufsetzen auf einen Turmkopf und ein verbessertes Verfahren zum Einziehen von kabelförmigen Elementen, insbesondere von Spanngliedern, entlang eines Turms bereitzustellen. Insbesondere ist es eine Aufgabe der vorliegenden Erfindung, eine Montagetraverse zum Aufsetzen auf einen Turmkopf und ein Verfahren zum Einziehen von kabelförmigen Elementen, insbesondere von Spanngliedern, entlang eines Turms bereitzustellen, welche die genannten Nachteile vermindern oder beseitigen. Insbesondere ist es eine Aufgabe der vorliegenden Erfindung, eine Montagetraverse zum Aufsetzen auf einen Turmkopf und ein Verfahren zum Einziehen von kabelförmigen Elementen, insbesondere von Spanngliedern, entlang eines Turms bereitzustellen, welche eine kostensparende und/oder vereinfachte und/oder zuverlässige Lösung zum Vorspannen von Spanngliedern eines Turms ermöglichen.

Diese Aufgabe wird erfindungsgemäß gelöst durch eine Montagetraverse zum Aufsetzen auf einen Turmkopf, insbesondere auf einen Turmkopf eines Turms einer Windenergieanlage, nach Anspruch 1.

Die Erfindung beruht unter anderem auf der Erkenntnis, dass das Vorsehen einer Montagetraverse, die auf den Turmkopf aufgesetzt werden kann, verschiedene Vorteile beispielsweise hinsichtlich der Arbeitssicherheit und der Kosten mit sich bringt.

Eine hier beschriebene Montagetraverse kann insbesondere dazu eingesetzt werden, kabelförmige Elemente, wie beispielsweise Spannglieder oder elektrische Leitungen, wie beispielsweise Leistungsübertragungs- oder Erdungskabel, entlang des Turms zu verlegen bzw. einzuziehen. Das Einziehen von kabelförmigen Elementen entlang eines Turms kann insbesondere bedeuten, solche Elemente in vertikaler Richtung, beispielsweise entlang einer Innenseite des Turms, zu verlegen. Das Einziehen von kabelförmigen Elementen entlang eines Turms kann ferner bedeuten, erste Enden solcher Elemente zunächst - beispielsweise im Turminneren - hochzuziehen und dann die ersten Enden am Turmkopf und zweite Enden solcher Elemente am Turmfuß zu befestigen.

Die hier beschriebene Montagetraverse kann insbesondere auch dazu eingesetzt werden, kabelförmige Elemente, insbesondere Spannglieder, zu verspannen, beispielsweise mittels einer Spannpresse.

Insbesondere in Türmen von Windenergieanlagen haben kabelförmige Elemente meist einen großen Querschnitt und aufgrund ihrer Länge, die meist in etwa der Turmhöhe entspricht, insgesamt ein großes Gewicht. Für das Einziehen solcher kabelförmigen Elemente entlang eines Turms ist daher in der Regel ein Kran erforderlich.

Ein Kran, der auch noch in großen Turmhöhen arbeiten kann, ist in der Regel mit hohen Kosten verbunden. Die hier beschriebene Montagetraverse kann etliche Aufgaben, die ansonsten einen solchen Kran erfordern (beispielsweise das Einziehen von kabelförmigen Elementen entlang des Turms, insbesondere auch das Vorspannen von Spanngliedern), übernehmen, und so die Einsatzdauer eines solchen Krans deutlich verkürzen, was zu erheblichen zeitlichen und/oder monetären Einsparungen führen kann.

Ferner kann mit der hier beschriebenen Montagetraverse die Arbeitsebene oberhalb von schwebenden Lasten (die beispielsweise an den Laufkatzen der Montagetraverse angeschlagen sind) angeordnet werden, was die Arbeitssicherheit gegenüber der Arbeit mit einem Kran, bei dem schwebende Lasten meist (zumindest auch bzw. teilweise) oberhalb der Arbeitsebene angeordnet sind, deutlich erhöht.

Die Verankerung von Spanngliedern am Turmfuß erfolgt meist im Fundament, die Verankerung am Turmkopf meist an einem dafür ausgebildeten Turmkopfsegment. Bei Hybridtürmen, bei denen sich an einen Betonturmteil zuoberst noch ein (meist deutlich kürzerer) Stahlturmteil anschließt, erfolgt die Verankerung meist an einem Turmkopfsegment, das am Übergang vom Betonturmteil zum Stahlturmteil angeordnet ist. In der vorliegenden Anmeldung wird mit Turmkopf daher insbesondere das obere Ende eines Betonturms bzw. eines Betonturmteils bezeichnet, insbesondere ein Turmkopfsegment, das zur Verankerung von Spanngliedern ausgebildet ist. Ein solches Turmkopfsegment kann beispielsweise ein Betonsegment oder ein Stahlsegment oder ein Hybrid-Segment aus Verschiedenen Materialien (insbesondere Stahl und Beton, aber gegebenenfalls auch CFK, GFK o.ä.) sein.

Auch wenn sich auf ein solches Turmkopfsegment noch ein Stahlturmteil anschließt, bezeichnet Turmkopf in dieser Anmeldung vorzugsweise das für die Verankerung von Spanngliedern ausgebildete Turmkopfsegment am oberen Ende des Betonturmteils bzw. am Übergang vom Betonturmteil zum Stahlturmteil.

An einem unteren Ende des Turmkopfs oder unterhalb des Turmkopfs ist vorzugsweise eine, ggf. temporäre, Arbeitsplattform ausgebildet. Diese dient insbesondere dem Aufenthalt und der Absicherung von Bedienpersonal. Die Arbeitsplattform weist vorzugsweise verschließbare Öffnungen auf, um Spannglieder und/oder andere Elemente durch die Arbeitsplattform hindurchführen zu können.

Die Montagetraverse dient insbesondere dazu, auf einen Turmkopf aufgesetzt zu werden. Dies bedeutet insbesondere, dass die Montagetraverse auf ein oberes Ende einer, meist ringförmigen, Turmwand aufgesetzt werden kann. Die Montagetraverse umfasst hierzu die folgenden Elemente: einen Hauptträger und zwei Hilfsträger. Der Hauptträger erstreckt sich von einem erst zu einem zweiten Ende, wobei der Hauptträger vorzugsweise mit dem ersten und dem zweiten Ende auf dem Turmkopf aufgesetzt werden kann. Mittig am Hauptträger ist an seinen beiden Seiten jeweils ein Hilfsträger angeordnet. Die zwei Hilfsträger erstrecken sich jeweils von einem ersten Ende, das mittig am Hauptträger angeordnet ist, zu einem zweiten Ende. Diese zweiten Enden der zwei Hilfsträger sind vorzugsweise ebenfalls ausgebildet zum Aufsetzen auf einen Turmkopf. Der Hauptträger und die beiden Hilfsträger der Montagetraverse haben vorzugsweise somit in der Draufsicht eine im wesentlichen kreuzförmige Ausgestaltung.

Die Montagetraverse weist ferner eine erste und eine zweite Laufkatze auf. Beide Laufkatzen sind am Hauptträger verfahrbar angeordnet, wobei die erste Laufkatze entlang mindestens eines ersten Abschnitts des Hauptträgers verfahrbar angeordnet ist und die zweite Laufkatze entlang mindestens eines zweiten Abschnitts des Hauptträgers verfahrbar angeordnet ist. Der erste und der zweite Abschnitt des Hauptträgers können identisch miteinander, verschieden voneinander oder sich überschneidend sein.

Ferner vorzugsweise sind die erste und/oder die zweite Laufkatze am Hauptträger an verschiedenen Positionen fixierbar. Ferner vorzugsweise können an den Laufkatzen Funktionselemente angeordnet werden. Ein Funktionselement kann beispielsweise ein Halteelement, eine Winde, eine Spannpresse, ein Baukorb, ein Hebezeug, oder ähnliches sein.

Ferner vorzugsweise können an der Montagetraverse, insbesondere am Hauptträger und/oder den zwei Hilfsträgern, Handgriffe angeordnet sein zum Handhaben der Montagetraverse und/oder zum Ergreifen durch das Bedienpersonal.

Der Hauptträger weist vorzugsweise eine Traglast von mindestens 500 kg, vorzugsweise mindestens 1 t, vorzugsweise mindestens 1,5 t, insbesondere mindestens 3 t auf.

Die hier beschriebene Montagetraverse hat verschiedene Vorteile. Die Konstruktion mit einem Hauptträger und zwei Hilfsträgern, die auf beiden Seiten des Hauptträgers mit ihren jeweiligen ersten Enden jeweils mittig am Hauptträger angeordnet sind, ist eine besonders stabile und zuverlässige Ausgestaltung, welche ein sicheres Arbeiten auch in großer Höhe am Turmkopf ermöglicht.

Durch das Vorsehen der zwei Laufkatzen am Hauptträger und deren verfahrbare Anordnung am Hauptträger wird eine hohe Flexibilität geschaffen, indem mittels der beiden Laufkatzen verschiedene Elemente, wie Spannglieder, Werkzeuge oder anderes, entlang des Hauptträgers positionierbar sind.

So kann beispielsweise eine Laufkatze dazu eingesetzt werden, mit einem Hebezeug, wie beispielsweise einer Winde, ein Spannglied vom Turmfuß zum Turmkopf hochzuziehen, und die andere Laufkatze kann dazu eingesetzt werden, mittels eines Werkzeugs, wie beispielsweise einer Spannpresse, dass Spannglied vorzuspannen. Durch die Anordnung von zwei Laufkatzen können diese unabhängig voneinander und parallel zueinander bedient werden. So bietet die Montagetraverse eine große Flexibilität bei gleichzeitig hoher Sicherheit für Arbeiten am Turmkopf.

In einer bevorzugten Ausführungsform ist vorgesehen, dass das erste und das zweite Ende des Hauptträgers und die jeweiligen zweiten Enden der zwei Hilfsträger ausgebildet sind, beweglich, insbesondere in Umfangsrichtung beweglich, auf einem Turmkopf angeordnet zu werden. Dabei ist es insbesondere bevorzugt, dass das erste und das zweite Ende des Hauptträgers und/oder die jeweiligen zweiten Enden der zwei Hilfsträger jeweils mindestens ein im Betriebszustand nach unten weisendes Gleit- oder Rollelement aufweisen.

Eine Ausbildung der beiden Enden des Hauptträgers und der jeweiligen zweiten Enden der zwei Hilfsträger derart, dass sie auf einem Turmkopf beweglich angeordnet sind, erhöht die Flexibilität der Montagetraverse weiter. Die bewegliche Anordnung auf dem Turmkopf bedeutet insbesondere, dass sich die Montagetraverse relativ zum Turmkopf bewegen kann. Besonders bevorzugt ist dabei eine Drehbewegung um eine im Betriebszustand der Montagetraverse vertikalen Achse, die vorzugsweise identisch ist mit einer Längsachse des Turms. Insbesondere bei einem Turm mit ringförmigen Querschnitt ergibt sich so eine Bewegung der beiden Enden des Hauptträgers sowie der jeweiligen zweiten Enden der zwei Hilfsträger in Umfangsrichtung des Turmkopfs. Im Regelfall wird eine Auflagefläche des Turmkopfs als eine im Wesentlichen horizontale, ringförmige Oberfläche der ringförmigen Turmwandung des Turmkopfsegments ausgebildet sein. Auf und entlang dieser Auflagefläche ist die Montagetraverse vorzugsweise beweglich. Hierzu weist die Montagetraverse vorzugsweise Gleit- oder Rollelemente auf, die im Betriebszustand nach unten weisen, insbesondere damit sie auf einer im wesentlichen horizontalen Auflagefläche auffliegen können. Gleit- oder Rollelemente können beispielsweise in Form von Rollen oder Kugeln ausgebildet sein.

Gemäß einer bevorzugten Ausführungsform ist vorgesehen, dass die jeweiligen zweiten Enden der zwei Hilfsträger jeweils mindestens ein nach außen weisendes Gleit- oder Rollelement aufweisen.

Gleit- oder Rollelemente an den jeweiligen zweiten Enden der zwei Hilfsträger, die nach außen weisen, haben insbesondere die folgenden Eigenschaften und Vorteile. Unter einem nach außen weisenden Gleit-oder Rollelement wird insbesondere ein Gleit-oder Rollelement verstanden, das vom jeweiligen ersten Enden des jeweiligen Hilfsträgers abgewandt ist. Im Betriebszustand der Montagetraverse auf einem Turmkopf sind solche Gleit- oder Rollelemente vorzugsweise einer Innenwand des Turmkopfs zugewandt und an dieser Innenwand anliegend. Besonders bevorzugt ist es, dass diese Gleit- oder Rollelemente zur Anlage beispielsweise an der Innenseite eines oberen Flansches des Turmkopfs, dessen Oberseite die Auflagefläche für die Montagetraverse bildet, ausgebildet sind. Auf diese Weise kann die Stabilität der Montagetraverse noch weiter erhöht werden. Gleit- oder Rollelemente können beispielsweise in Form von Rollen oder Kugeln ausgebildet sein.

Eine weitere bevorzugte Fortbildung zeichnet sich dadurch aus, dass die jeweiligen ersten Enden der zwei Hilfsträger mit dem Hauptträger beweglich, insbesondere schwenkbar, verbunden sind.

Vorzugsweise sind die jeweiligen ersten Enden der zwei Hilfsträger mit dem Hauptträger um eine im wesentlichen vertikale Achse schwenkbar verbunden. Ferner vorzugsweise sind die zwei Hilfsträger jeweils relativ zum Hauptträger fixierbar, insbesondere in verschiedenen Positionen fixierbar.

Auf diese Weise kann die Montagetraverse, beispielsweise in einem Transportzustand, hinsichtlich ihrer Abmessungen deutlich verkleinert werden, wenn die zwei Hilfsträger durch Verschwenken an den Hauptträger angenähert werden können. Im Betriebszustand hingegen können die Hilfsträger dann vorzugsweise aufgeschwenkt werden, sodass sich die beschriebene, in der Draufsicht vorzugsweise kreuzförmige Gestalt der Montagetraverse ergibt. Dabei ist insbesondere bevorzugt und für die Arbeitssicherheit und Transportsicherheit günstig, dass die zwei Hilfsträger in verschiedenen Positionen, insbesondere Betriebsposition und in einer Transportposition relativ zum Hauptträger fixierbar sind, sodass ein ungewolltes oder unbeabsichtigtes Verändern der Position der Hilfsträger verhindert wird.

Ferner ist vorzugsweise vorgesehen, dass das erste und das zweite Ende des Hauptträgers und/oder die jeweiligen zweiten Enden der zwei Hilfsträger jeweils mindestens eine sich im Betriebszustand nach unten öffnende Führungsfläche aufweisen.

Eine im Betriebszustand sich nach unten öffnende Führungsfläche wird hier insbesondere als Führungsfläche verstanden, die ein oberes und ein unteres Ende aufweist, wobei im auf den Turmkopf aufgesetzten Zustand das untere Ende vom Turmkopf weiter entfernt ist als das oberes Ende. Sich solchermaßen nach unten öffnende Führungsflächen dienen insbesondere dazu, das Aufsetzen der Montagetraverse auf den Turmkopf, insbesondere auf eine ringförmige Turmwandung, zu erleichtern. Die sich nach unten öffnende Führungsflächen erleichtern es, die Montagetraverse direkt auf dem Turmkopf zu positionieren und beim Annähern der Montagetraverse an den Turmkopf, insbesondere an die Auflagefläche, die Position der Montagetraverse zu korrigieren.

In einer weiteren bevorzugten Ausführungsform ist vorgesehen, dass das erste und das zweite Ende des Hauptträgers und/oder die jeweiligen zweiten Enden der zwei Hilfsträger jeweils mindestens ein Arretierelement zum Arretieren des Hauptträgers an einem Turmkopf aufweisen.

Eine Arretierung des Hauptträgers an dem Turmkopf hat den Vorteil, dass insbesondere während des Arbeitens und/oder während des Anhebens des Turmkopfs für den Fall, dass die Montagetraverse bereits noch am Boden auf das Turmkopfsegment aufgesetzt wurde und mit diesem zusammen zum Turmkopf gebracht wird, sicher und unverrückbar am Hauptträger angeordnet ist. Während die oben beschriebene Beweglichkeit der Montagetraverse auf dem Turmkopf bevorzugt ist, um eine hohe Flexibilität insbesondere hinsichtlich der Positionierung von an den Laufkatzen angeordneten Funktionselementen möglichst innerhalb des gesamten Innenraums des Turmkopfs zu ermöglichen, ist in bestimmten Situationen eine sichere und zuverlässige Arretierung des Hauptträgers am Turmkopf bevorzugt.

Vorzugsweise ist das mindestens eine Arretierelement mit dem Hauptträger über eine Verliersicherung, beispielsweise über eine Schlinge verbunden. Ferner vorzugsweise weist das Arretierelement ein Sicherungselement auf, das ein unbeabsichtigtes Lösen des Arretierelements aus der Arretierstellung verhindert.

Eine bevorzugte Weiterbildung zeichnet sich dadurch aus, dass die jeweiligen zweiten Enden der zwei Hilfsträger jeweils mindestens eine im Betriebszustand nach oben weisende Führungsfläche aufweisen.

Die im Betriebszustand nach oben weisenden Führungsflächen an den zweiten Enden der zwei Hilfsträger dienen vorzugsweise dazu, unter einen oberen Flansch des Turmkopfs, dessen Oberseite als Auflagefläche dient, zu untergreifen. Auf diese Weise kann eine Sicherung gegen ein Abheben der zweiten Enden der zwei Hilfsträger vom Turmkopf gewährleistet werden.

In einer bevorzugten Ausführungsform ist vorgesehen, dass die jeweiligen zweiten Enden der zwei Hilfsträger jeweils ein bewegliches, insbesondere schwenkbar, angeordnetes Tragelement aufweisen, an dem vorzugsweise die im Betriebszustand nach oben weisenden Führungsflächen und/oder die nach außen weisenden Gleit- oder Rollelemente angeordnet sind.

Das Tragelement ist vorzugsweise über ein Spannelement, wie beispielsweise ein Spannschloss, relativ zum jeweiligen Hilfsträger fixierbar.

Die Anordnung der im Betriebszustand nach oben weisenden Führungsflächen und/oder der nach außen weisendes Gleit- oder Rollelemente an einem beweglich, insbesondere schwenkbar, angeordneten Tragelement hat den Vorteil, dass eine Positionierung der Montagetraverse auf einem Turmkopf, insbesondere einen Turmkopf mit einem oberen Flansch, dessen Oberseite als Auflagefläche ausgebildet ist, vereinfacht werden kann. Beim Aufsetzen der Montagetraverse können die Tragelemente in eine Position verschwenkt sein, und dort vorzugsweise mittels des Spannelements temporär fixiert sein, die ausreichend Raum für das Aufsetzen der Montagetraverse auf den Turmkopf lässt. Nach dem Aufsetzen können vorzugsweise die Tragelemente so verschwenkt werden, dass die im Betriebszustand nach oben weisenden Führungsflächen beispielsweise einen oberen Flansch am Turmkopf untergreifen und/oder die nach außen weisenden Gleit- oder Rollelemente an der Innenwand des Turmkopfs, insbesondere eines oberen Flansches des Turmkopfs, zur Anlage kommen. Auch in dieser Position sind die Tragelemente vorzugsweise temporär fixierbar, insbesondere über ein Spannelement, wie beispielsweise ein Spannschloss.

Gemäß einer bevorzugten Ausführungsform ist vorgesehen, dass ein Abstand zwischen dem ersten Ende des Hauptträgers und der Mitte des Hauptträgers veränderbar ist. In einer weiteren bevorzugten Ausführungsform ist vorgesehen, dass ein Abstand zwischen dem zweiten Ende des Hauptträgers und der Mitte des Hauptträgers veränderbar ist. Eine weitere bevorzugte Fortbildung zeichnet sich dadurch aus, dass ein Abstand zwischen den jeweiligen zweiten Enden der zwei Hilfsträger und der Mitte des Hauptträgers veränderbar ist.

Ferner ist vorzugsweise vorgesehen, dass der Hauptträger und/oder die zwei Hilfsträger als Teleskopträger ausgebildet sind. Gemäß einer bevorzugten Ausführungsform ist vorgesehen, dass das erste und/oder das zweite Ende des Hauptträgers verschiebbar an Verlängerungsabschnitten des Hauptträgers angeordnet und an unterschiedlichen Positionen fixierbar sind. In einer weiteren bevorzugten Ausführungsform ist vorgesehen, dass die zweiten Enden der zwei Hilfsträger an Verlängerungsabschnitten der Hilfsträger angeordnet und an unterschiedlichen Positionen fixierbar sind.

Die hier genannten Ausführungsformen und Fortbildungen sind insbesondere bevorzugt, um die Montagetraverse für Turmköpfe unterschiedlichen Durchmessers geeignet zu machen. Bei Turmköpfen unterschiedlichen Durchmessers ist es vorteilhaft, wenn entsprechend auch die zur Auflage auf dem Turmkopf vorgesehenen ersten und zweiten Enden des Hauptträgers sowie die jeweiligen zweiten Enden der zwei Hilfsträger in ihrem Abstand zueinander veränderlich sind. Hierzu können der Hauptträger und/oder die zwei Hilfsträger als Teleskopträger ausgebildet sein. Eine weitere Möglichkeit besteht darin, die ersten und zweiten Enden des Hauptträgers und/oder die jeweiligen zweiten Enden der zwei Hilfsträger verschiebbar am Hauptträger bzw. den zwei Hilfsträger anzuordnen. Hierzu weisen der Hauptträger und/oder die zwei Hilfsträger vorzugsweise Verlängerungsabschnitte auf, an denen die ersten und zweiten Enden des Hauptträgers bzw. die zweiten Enden der zwei Hilfsträger angeordnet sind, und entlang dieser sie verschoben und an unterschiedlichen Positionen fixierbar sind. Bei einem Turmkopf kleineren Durchmessers würde somit ein Teil der jeweiligen Verlängerungsabschnitte nach außen über den Turmkopf hinausragen, wohingegen bei einem Turmkopf größeren Durchmessers die jeweiligen Enden am jeweils äußeren Ende der Verlängerungsabschnitte angeordnet wären.

Ferner ist vorzugsweise vorgesehen, dass am ersten und zweiten Ende des Hauptträgers jeweils ein Halteelement angeordnet ist zur Aufnahme von Funktionselementen. Gemäß einer bevorzugten Ausführungsform ist vorgesehen, dass am Hauptträger mittig ein Halteelement angeordnet ist zur Aufnahme von Funktionselementen. In einer weiteren bevorzugten Ausführungsform ist vorgesehen, dass die erste und/oder die zweite Laufkatze Halteelemente aufweisen zur Aufnahme von Funktionselementen.

Erfindungsgemäß ist vorgesehen, dass die erste Laufkatze auf einer Unterseite des Hauptträgers angeordnet ist und die zweite Laufkatze auf einer Oberseite des Hauptträgers angeordnet ist.

Es ist ferner bevorzugt, dass die erste Laufkatze zwischen dem ersten Ende des Hauptträgers und einer Mitte des Hauptträgers angeordnet ist und die zweite Laufkatze zwischen dem zweiten Ende des Hauptträgers und der Mitte des Hauptträgers angeordnet ist. Eine weitere bevorzugte Fortbildung zeichnet sich dadurch aus, dass beide Laufkatzen zwischen dem ersten Ende des Hauptträgers und einer Mitte des Hauptträgers angeordnet sind. Ferner ist vorzugsweise vorgesehen, dass die erste und/oder die zweite Laufkatze lösbar an dem Hauptträger angeordnet ist. In einer weiteren bevorzugten Ausführungsform ist vorgesehen, dass die erste und/oder die zweite Laufkatze an mindestens zwei unterschiedlichen Positionen an dem Hauptträger positionierbar sind.

Die hier genannten bevorzugten Ausführungsform und Fortbildungen hinsichtlich der Ausgestaltung der Laufkatzen haben verschiedene Vorteile. Insgesamt ist eine flexible Anordnung der Laufkatzen bevorzugt, um auch entsprechend die Flexibilität der Montagetraverse hinsichtlich der Erreichbarkeit von verschiedenen Positionen innerhalb des Turmkopfs zu erhöhen. Je nachdem, welche Arbeiten zu verrichten sind und/oder welche Arbeitsweise mit den beiden Laufkatzen bevorzugt ist, kann es vorteilhaft sein, beide Laufkatzen auf einer Hälfte des Hauptträgers, also beispielsweise zwischen dem ersten Ende des Hauptträgers und der Mitte des Hauptträgers anzuordnen (oder entsprechend beide Laufkatzen zwischen dem zweiten Ende des Hauptträgers und der Mitte des Hauptträgers anzuordnen). Es kann jedoch auch bevorzugt sein, die erste Laufkatze zwischen dem ersten Ende des Hauptträgers und der Mitte des Hauptträgers anzuordnen und die zweite Laufkatze auf der anderen Hälfte des Hauptträgers anzuordnen, also zwischen dem zweiten Ende des Hauptträgers und der Mitte des Hauptträgers. Hierzu ist es insbesondere bevorzugt, dass die erste und/oder die zweite Laufkatze lösbar an dem Hauptträger angeordnet sind, damit zwischen unterschiedlichen Positionierungsalternativen gewechselt werden kann. Dabei ist es ebenso bevorzugt, dass die Laufkatzen an unterschiedlichen Positionen an dem Hauptträger positionierbar sind. Dabei ist es ferner insbesondere bevorzugt, dass der Hauptträger derart ausgebildet ist, die erste und/oder die zweite Laufkatze an mindestens zwei unterschiedlichen Positionen aufzunehmen.

Eine weitere bevorzugte Weiterbildung ist gekennzeichnet durch eine Abdeckung.

Dabei ist insbesondere bevorzugt, dass die Abdeckung eine, vorzugsweise zwei- oder mehrteilige, insbesondere flexible, Abdeckhaube und ein Abdeckgestell aufweist, welches insbesondere ausgebildet ist, die Abdeckhaube zu fixieren.

Das Abdeckgestell dient somit insbesondere dazu, die Abdeckhaube zu tragen bzw. abzustützen. Vorzugsweise ist die Abdeckung, insbesondere das Abdeckgestell und/oder die Abdeckhaube, zusammen mit der Montagetraverse auf dem Turmkopf beweglich. Dies hat den Vorteil, dass beispielsweise eine Verdrehung der Montagetraverse um eine vertikale Achse zur Folge hat, dass sich die Abdeckung mitdreht.

Gemäß einer bevorzugten Ausführungsform ist vorgesehen, dass das Abdeckgestell einen, vorzugsweise mindestens zweiteiligen, mindestens dreiteiligen, mindestens vierteiligen oder mehrteiligen Abdeckring aufweist. Ferner ist vorzugsweise vorgesehen, dass das Abdeckgestell einen zentralen Spanndorn, vorzugsweise mit einem Spannteller aufweist. Eine weitere bevorzugte Fortbildung zeichnet sich dadurch aus, dass das Abdeckgestell zwei Spannbügel, welche sich jeweils vorzugsweise über mindestens einen Abschnitt des Hauptträgers ausgehend von dessen ersten bzw. zweiten Ende erstrecken, aufweist. Das Vorsehen von zwei Spannbügeln, die sich über Abschnitte des Hauptträgers erstrecken, hat den Vorteil, dass ein Bereich oberhalb des Hauptträgers freigehalten wird, um die Beweglichkeit der ersten und/oder zweiten Laufkatze entlang des Hauptträgers nicht durch die Abdeckhaube zu blockieren.

Gemäß einer bevorzugten Ausführungsform ist vorgesehen, dass die Abdeckhaube mehrere verschließbare Öffnungen aufweist. Eine weitere bevorzugte Fortbildung zeichnet sich dadurch aus, dass die Abdeckhaube Befestigungselemente aufweist.

Verschließbare Öffnungen der Abdeckhaube erleichtern den Zugriff und/oder das Durchführen von Elementen durch die Abdeckhaube. Befestigungselemente der Abdeckhaube können Öffnungen in der Abdeckhaube sein, in die komplementäre Befestigungselemente eingreifen, mit denen die Abdeckhaube vorzugweise lösbar am Abdeckgestell befestigt werden kann.

Weitere vorteilhafte Ausführungsvarianten der zuvor beschriebenen Vorrichtung ergeben sich durch Kombination der hier erörterten bevorzugten Merkmale.

Gemäß einem weiteren Aspekt der Erfindung wird die eingangs genannte Aufgabe gelöst durch ein Verfahren zum Einziehen von kabelförmigen Elementen, insbesondere von Spanngliedern, entlang eines Turms, insbesondere eines Turms einer Windenergieanlage, das Verfahren umfassend: Aufsetzen einer zuvor beschriebenen Montagetraverse auf einen Turmkopf des Turms, Anordnen eines Hebezeugs an der ersten und/oder zweiten Laufkatze, Hochziehen eines ersten Endes des kabelförmigen Elements bis zum Turmkopf mittels der Montagetraverse.

Eine bevorzugte Weiterbildung des Verfahrens ist gekennzeichnet durch Positionieren der Montagetraverse an einer gewünschten Umfangsposition, und/oder Arretieren der Montagetraverse, und/oder Anordnen und/oder Fixieren eines zweiten Endes des Spannglieds am Turmfuß, und/oder Anordnen einer Spannpresse an der ersten und/oder zweiten Laufkatze, Vorspannen eines Spannglieds mittels der Spannpresse, und/oder Fixieren des zweiten Endes des kabelförmigen Elements, insbesondere des Spannglieds, am Turmkopf.

Die hier beschriebene Reihenfolge der Verfahrensschritte ist bevorzugt, kann aber auch anders sein.

Das zuvor beschriebene Verfahren und seine möglichen Fortbildungen weisen vorzugsweise Merkmale bzw. Verfahrensschritte auf, die sie insbesondere dafür geeignet machen, unter Verwendung einer erfindungsgemäßen Montagetraverse und ihrer Fortbildungen verwendet zu werden.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine dreidimensionale Darstellung einer beispielhaften Ausführungsform einer Montagetraverse;
- Figur 3:: eine weitere dreidimensionale Darstellung der Montagetraverse gemäß Figur 2;
- Figur 4:: eine schematische Darstellung eines Ausschnitts eines Ausführungsbeispiels einer Montagetraverse aufgesetzt auf einen Turmkopf;
- Figur 5:: eine schematische dreidimensionale Darstellung einer Ausführungsform einer Montagetraverse aufgesetzt auf einen Turmkopf;
- Figur 6: eine Draufsicht auf die Montagetraverse nach Figur 2;
- Figur 7:: eine Seitenansicht der Montagetraverse nach Figur 2;
- Figur 8:: eine weitere Seitenansicht der Montagetraverse nach Figur 2;
- Figur 9:: eine dreidimensionale Ansicht einer beispielhaften Ausführungsform eines Abdeckgestells;
- Figur 10:: eine Draufsicht auf das Abdeckgestell nach Figur 9;
- Figur 11:: eine Seitenansicht des Abdeckgestells nach Figur 9 mit einem vergrößerten Detail Z
- Figur 12:: eine weitere Seitenansicht des Abdeckgestells nach Figur 9;
- Figur 13:: eine dreidimensionale Darstellung einer beispielhaften Ausführungsform eines Abdeckgestells mit Haltebügel;
- Figur 14:: eine dreidimensionale Darstellung einer beispielhaften Ausführungsform einer Montagetraverse mit Abdeckgestell und Abdeckhaube;
- Figur 15:: eine schematische Darstellung einer beispielhaften Ausführungsform eines Verfahrens zum Vorspannen von Spanngliedern eines Turms;
- Figur 16:: einen Längsschnitt eines oberen Endes eines Turms mit einer nicht erfindungsgemäßen Ausführungsform einer Montagetraverse;
- Figur 17:: eine Schnittansicht durch eine beispielhafte Ausführungsform einer Montagetraverse;
- Figur 18:: das zweite Ende eines Hilfsträgers einer beispielhaften Ausführungsform einer Montagetraverse mit Tragelement in geschlossener Position; und
- Figur 19:: das zweite Ende eines Hilfsträgers einer beispielhaften Ausführungsform einer Montagetraverse mit Tragelement in offener Position.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind

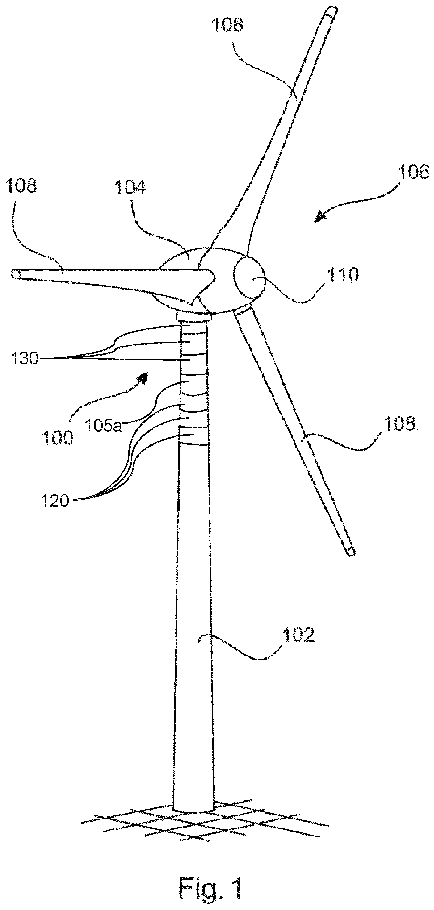

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

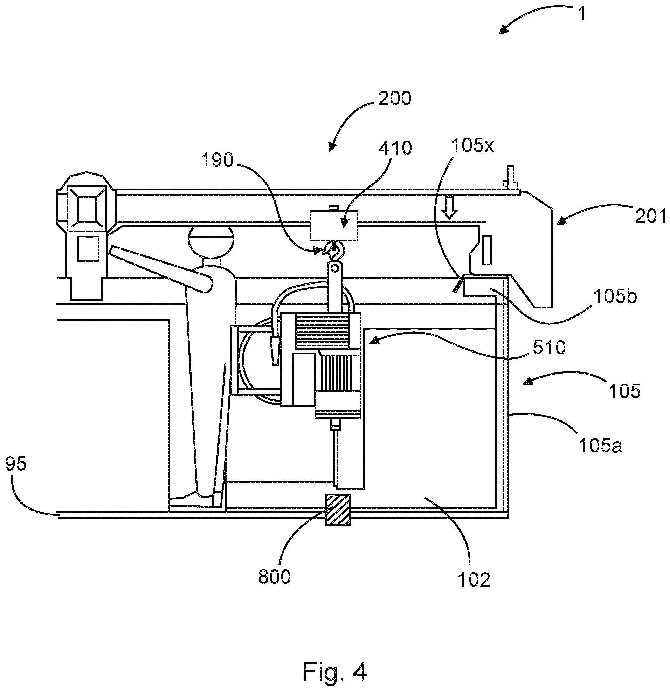

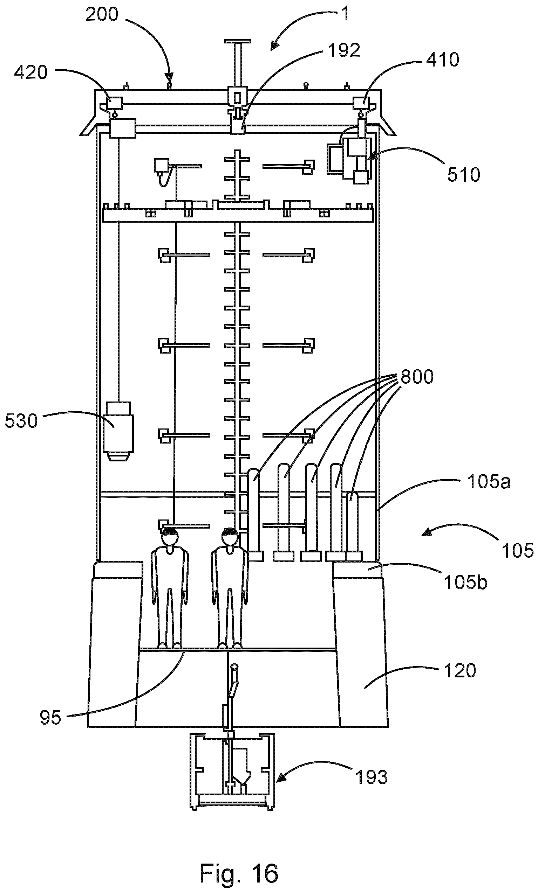

Der Turm 102 ist als Hybridturm mit einem Betonturmteil mit Betonsegmenten 120 und einem Stahlturmteil mit Stahlsegmenten 130 ausgeführt. Als Turmkopf 105 wird hier das obere Ende des Betonturmteils mit Betonsegmenten 120 bezeichnet, insbesondere das Turmkopfsegment 105a am Übergang vom Betonturmteil zum Stahlturmteil, das zur Verankerung von Spanngliedern 800 (vgl. Fig. 4 und Fig. 16) ausgebildet ist. Als Turmkopf 105 ist hier somit insbesondere das obere Ende eines Betonturms 102 bzw. eines Betonturmteils mit Betonsegmenten 120 bezeichnet, insbesondere ein Turmkopfsegment 105, das zur Verankerung von Spanngliedern 800 ausgebildet ist. Auch wenn sich auf ein solches Turmkopfsegment 105a noch ein Stahlturmteil mit Stahlturmsegmenten 120 anschließt, bezeichnet Turmkopf 105 in dieser Anmeldung vorzugsweise das für die Verankerung von Spanngliedern ausgebildete Turmkopfsegment 105a am oberen Ende des Betonturmteils bzw. am Übergang vom Betonturmteil zum Stahlturmteil.

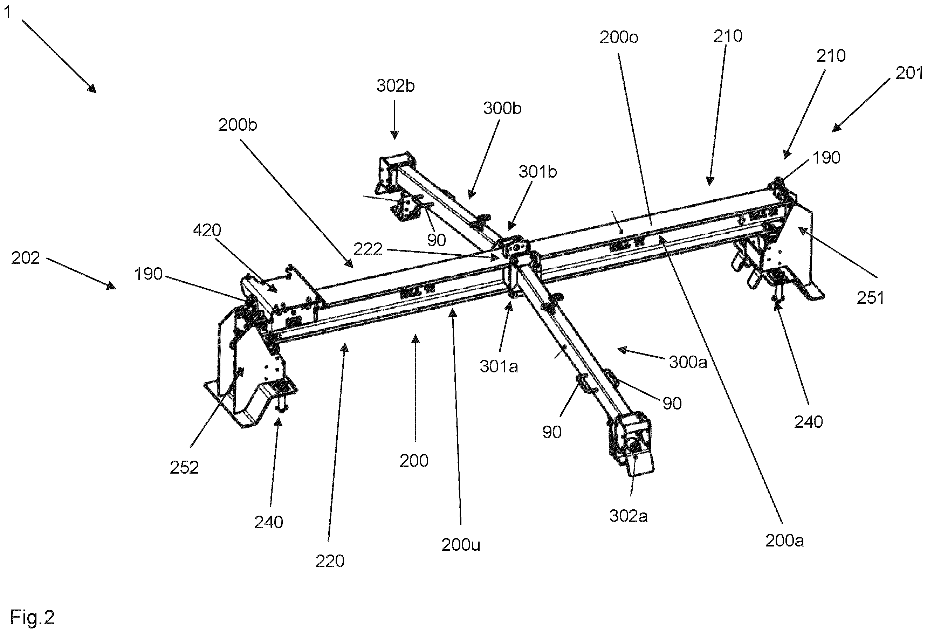

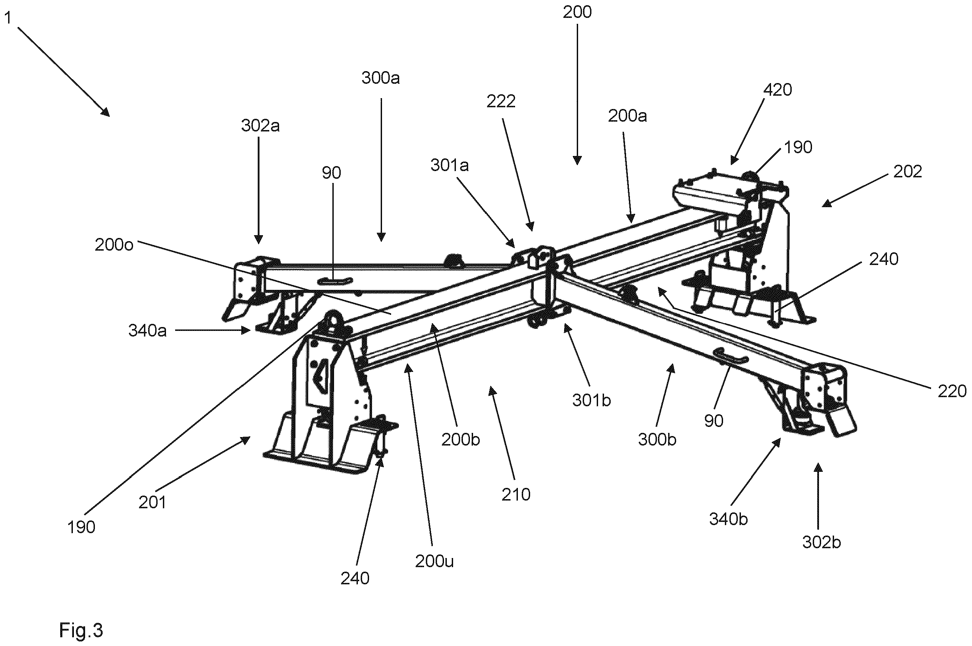

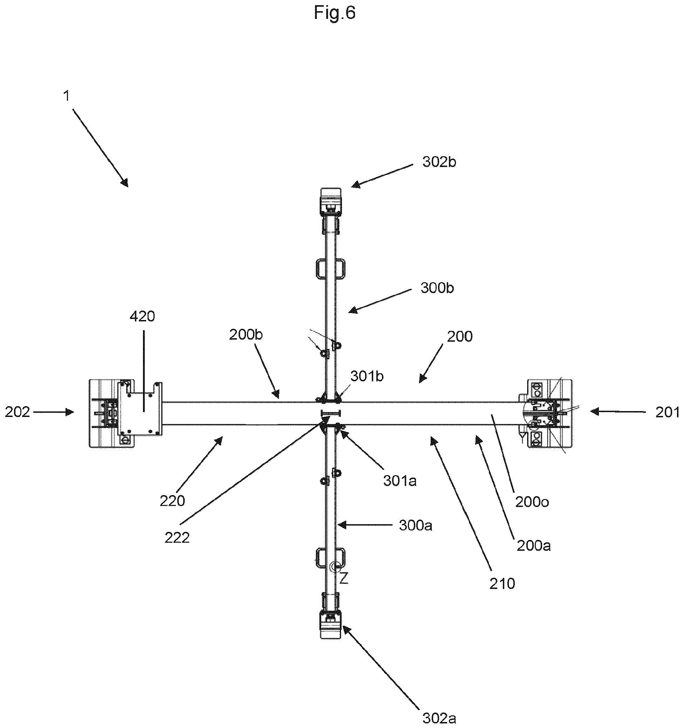

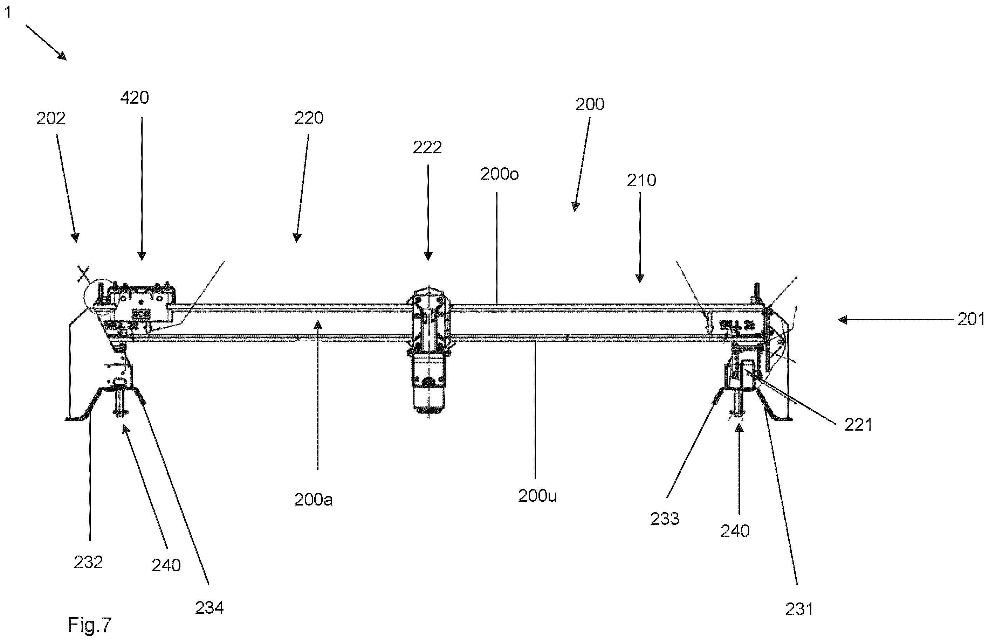

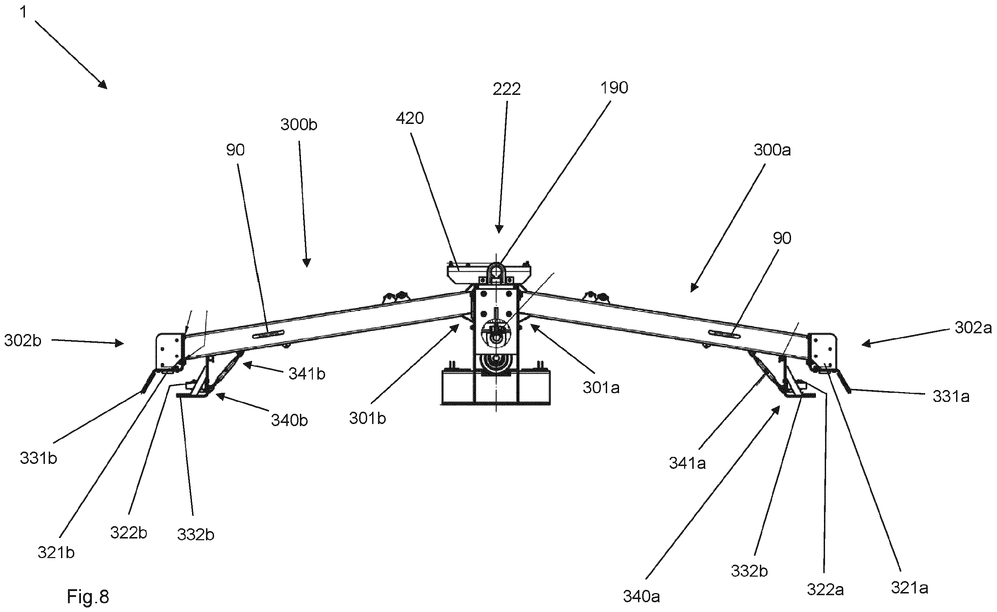

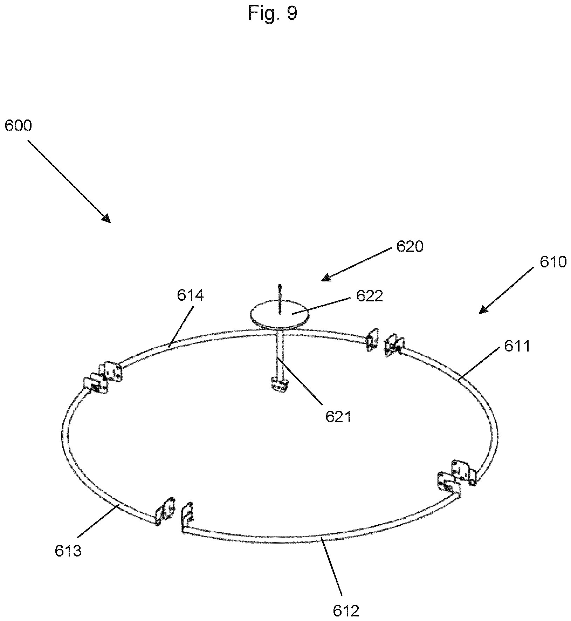

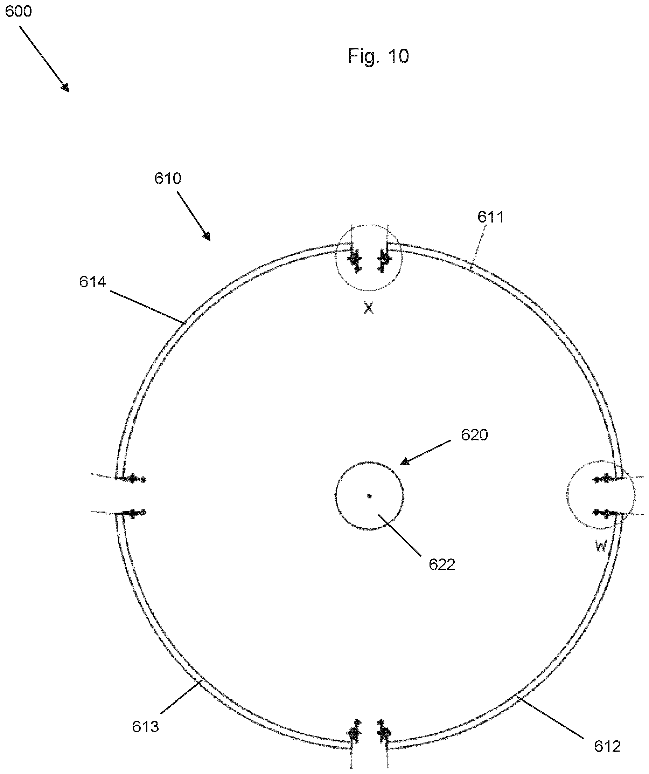

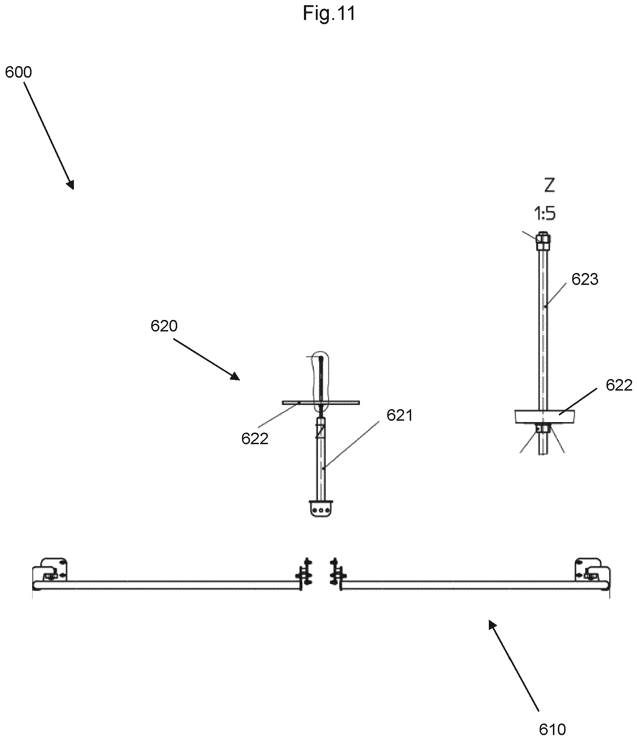

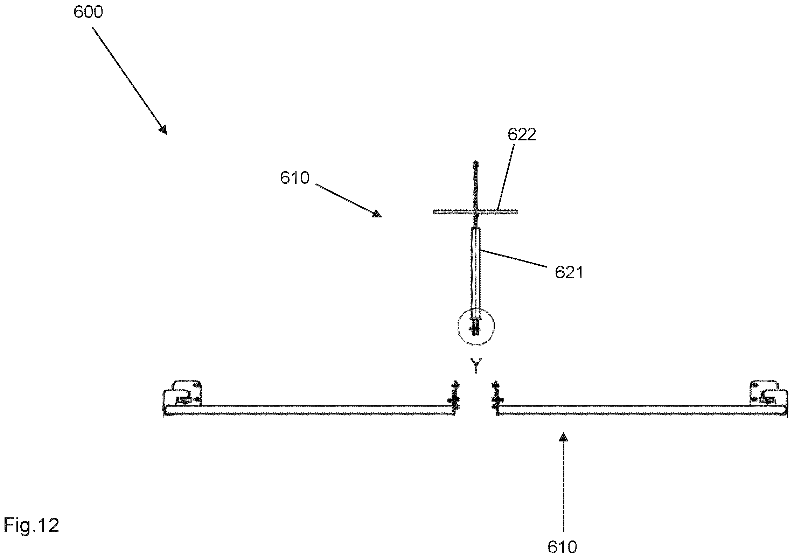

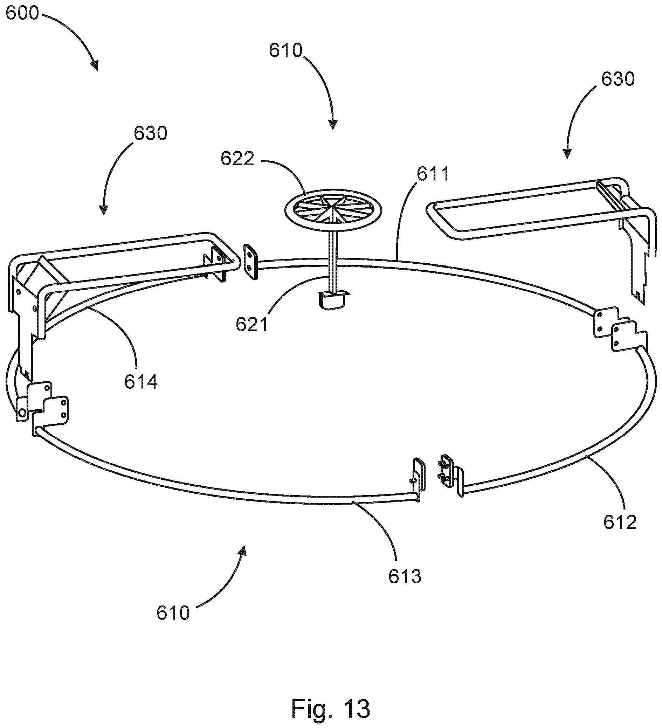

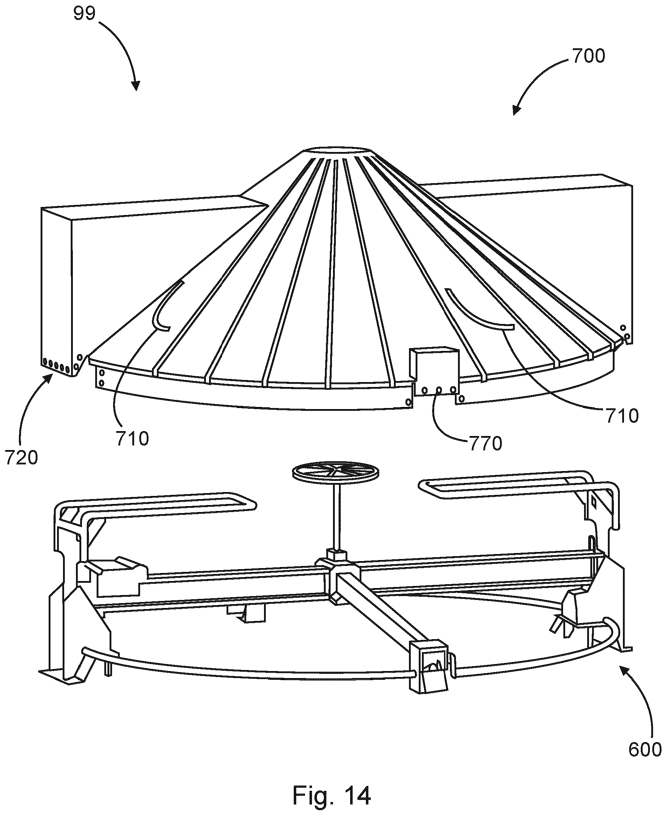

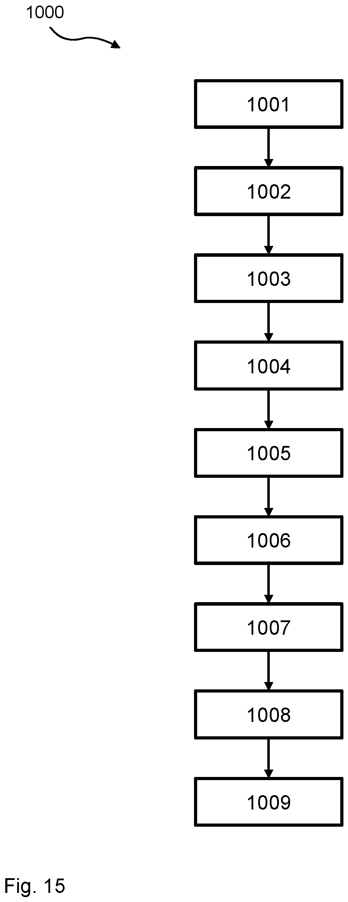

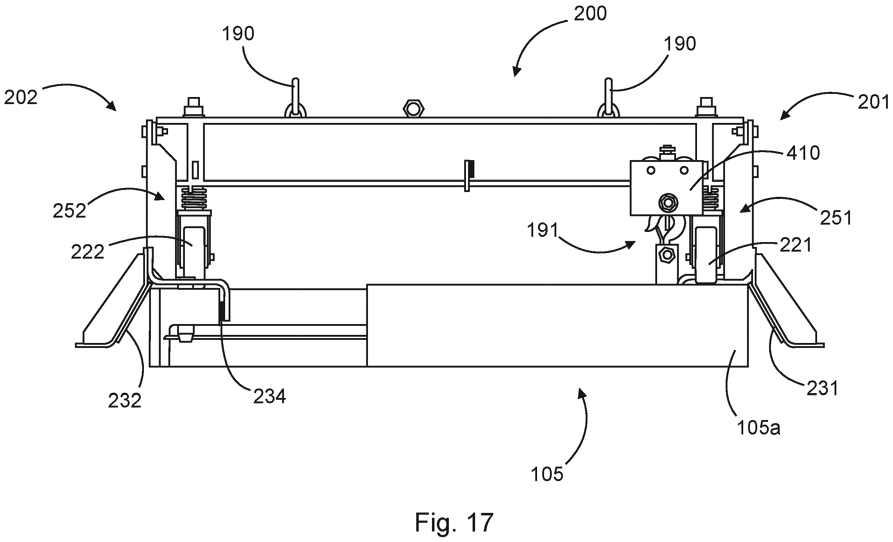

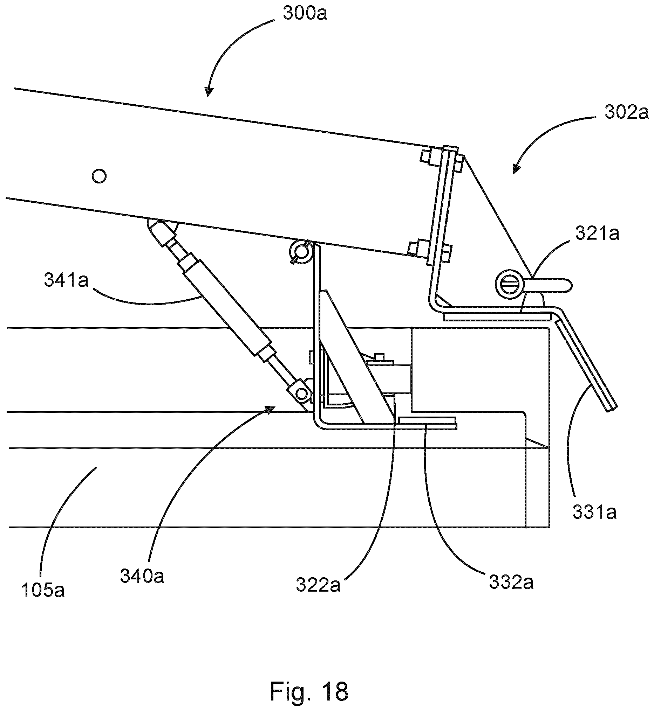

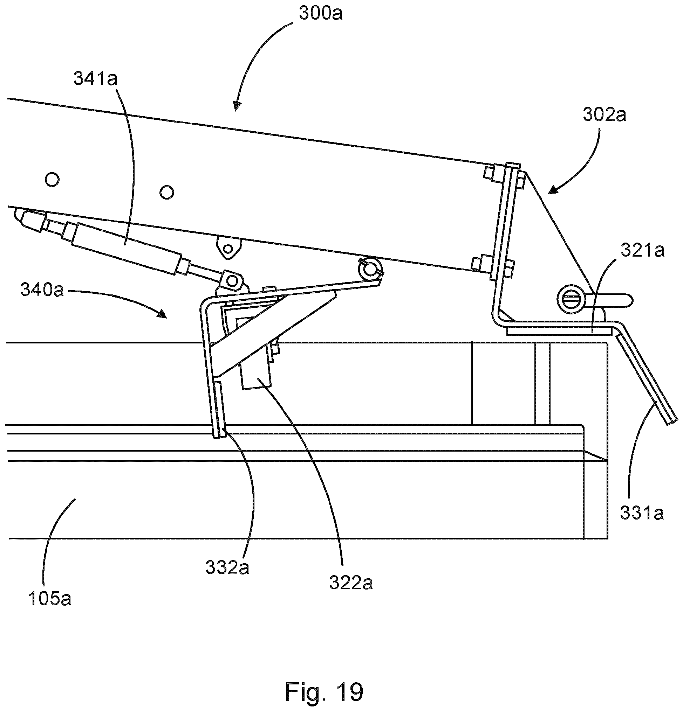

In den Figuren 2-8 sind beispielhafte Ausführungsformen einer Montagetraverse 1 dargestellt. In den Figuren 9-13 sind beispielhafte Ausführungsformen eines Abdeckgestells 600 dargestellt, in Figur 14 eine Montagetraverse 1 mit Abdeckgestell 600 und Abdeckhaube 700. Figur 15 zeigt eine schematische Darstellung einer beispielhaften Ausführungsform eines Verfahrens 1000 zum Vorspannen von Spanngliedern 800 eines Turms 102. Die Figur zeigt einen Längsschnitt eines oberen Endes eines Turms mit einer beispielhaften Ausführungsform einer Montagetraverse 1 und in Figur 17 ist eine Schnittansicht durch eine beispielhafte Ausführungsform einer Montagetraverse gezeigt. Die Figuren 18 und 19 schließlich zeigen das zweite Ende 302a eines Hilfsträgers 300a einer beispielhaften Ausführungsform einer Montagetraverse mit dem Tragelement 340 in der geschlossenen bzw. offenen Position.

Eine Montagetraverse 1 dient insbesondere zum Aufsetzen auf einen Turmkopf 105 eines Turms 102 einer Windenergieanlage 100. Mittels der Montagetraverse 1 und daran angeordneter Funktionselemente können, insbesondere extern geführte, Spannglieder 800 am Turmkopf 105 vorgespannt werden.

Die Montagetraverse 1 umfasst einen Hauptträger 200 mit einem ersten und einem zweiten Ende 201, 202. Ferner weist die Montagetraverse 1 zwei Hilfsträger 300a, b mit jeweils einem ersten und einem zweiten Ende 301a, b, 302a, b auf. Die zwei Hilfsträger 300a, b sind auf beiden Seiten 200a, b des Hauptträgers 200 mit ihren jeweiligen ersten Enden 301a, b jeweils mittig an dem Hauptträger 200 angeordnet.

Das erste und das zweite Ende 201, 202 des Hauptträgers 200 weisen mindestens ein Arretierelement 240 zum Arretieren des Hauptträgers 200 an einem Turmkopf 105 auf. Die Arretierelemente 240 sind vorzugsweise mit dem Hauptträger 200 über eine Verliersicherung, beispielsweise über eine Schlinge, verbunden. Ferner vorzugsweise weist das Arretierelement ein Sicherungselement auf, das ein unbeabsichtigtes Lösen des Arretierelements aus der Arretierstellung verhindert.

Das erste und das zweite Ende 201, 202 des Hauptträgers 200 weisen ferner jeweils ein Seitenteil 251, 252 auf (vgl. Fig. 2 und 17). Die Höhe der Seitenteile 251, 252 ist vorzugsweise abgestimmt auf eine erforderliche Arbeitshöhe unterhalb der Montagetraverse 1, beispielsweise zwischen einer Arbeitsplattform und der Montagetraverse 1. Ferner vorzugsweise können die Seitenteile 251, 252 lösbar und/oder austauschbar und/oder als Teleskopelemente ausgebildet sind, um die Höhe der Seitenteile 251, 252 und damit die Arbeitshöhe unterhalb der Montagetraverse 1 verändern zu können.

An einer Unterseite 200u des Hauptträgers 200 ist eine erste Laufkatze 410 entlang mindestens eines ersten Abschnitts 210 des Hauptträgers 200 verfahrbar angeordnet (vgl. z.B. Fig. 4). An einer Oberseite 200o des Hauptträgers 200 ist eine zweite Laufkatze 420 entlang mindestens eines zweiten Abschnitts 220 des Hauptträgers 200 verfahrbar angeordnet. In der nicht erfindungsgemäßen Ausgestaltung nach Fig. 16 ist auch die zweite Laufkatze 420 an der Unterseite des Hauptträgers 200 angeordnet.

Die erste Laufkatze 410 ist zwischen dem ersten Ende 201 des Hauptträgers 200 und einer Mitte 222 des Hauptträgers 200 angeordnet und die zweite Laufkatze 420 ist zwischen dem zweiten Ende 202 des Hauptträgers 200 und der Mitte 222 des Hauptträgers 200 angeordnet. Vorzugsweise sind die erste und die zweite Laufkatze 410, 420 lösbar an dem Hauptträger 200 angeordnet und sind an mindestens zwei unterschiedlichen Positionen an dem Hauptträger 200 positionierbar.

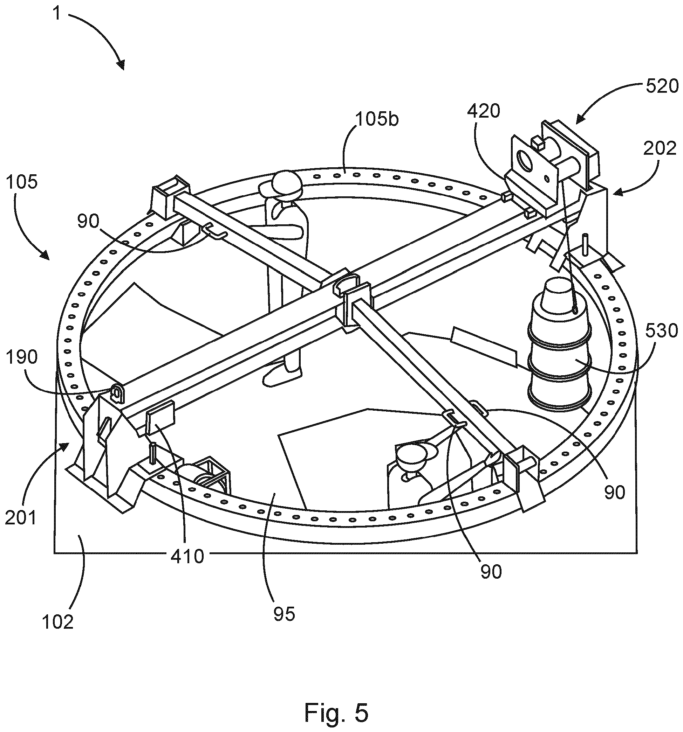

An den Laufkatzen 410, 420 können verschiedene Funktionselemente angeordnet werden. Die erste und/oder die zweite Laufkatze 410, 420 weisen vorzugsweise Halteelemente 191 auf zur Aufnahme von Funktionselementen. Beispielsweise ist in Fig. 4 eine erste Winde 510 an der ersten Laufkatze 410 angeordnet und in Figur 5 ist an der zweiten Laufkatze 420 eine zweite Winde 520 sowie eine Spannpresse 530 angeordnet.

Die Figuren 4 und 5 zeigen die Montagetraverse 1 im Betriebszustand, in dem die Montagetraverse 1 auf den Turmkopf 105 aufgesetzt ist. Das Turmkopfsegment 105a weist einen oberen Flansch 105b auf, der auf seiner Oberseite eine im Wesentlichen horizontale Auflagefläche für die Montagetraverse 1 aufweist.

Der obere Flansch 105b des Turmkopfsegments 105a weist ferner mehrere Durchgangsöffnungen auf, die insbesondere dazu dienen, Befestigungselemente aufzunehmen, mit denen ein Stahlsegment 130 am Turmkopfsegment 105a befestigt werden kann. Im in den Fig. 4 und 5 gezeigten Betriebszustand der Montagetraverse 1 können vorzugsweise die Arretierelemente 240 des Hauptträgers 200 in den Öffnungen des oberen Flansches 105b des Turmkopfsegments 105a befestigt werden.

Zu erkennen ist in Fig. 5 ferner eine Arbeitsplattform 95, auf der sich zwei Bedienpersonen aufhalten. Die Arbeitsplattform 95 weist vorzugsweise verschließbare Öffnungen auf, durch die beispielsweise Spannglieder, Seile oder anderes durchgeführt werden kann. In Figur 4 ist ferner das obere Ende eines Spannglieds 800 zu erkennen. An den Hilfsträgern 300a, b sind Handgriffe 90 angeordnet.

Das erste und das zweite Ende 201, 202 des Hauptträgers 200 und die jeweiligen zweiten Enden 302a, b der zwei Hilfsträger 300a, b sind ausgebildet, beweglich, insbesondere in Umfangsrichtung beweglich, auf dem Turmkopf 105 angeordnet zu werden. Das erste und das zweite Ende 201, 202 des Hauptträgers 200 sowie die jeweiligen zweiten Enden 302a, b der zwei Hilfsträger 300a, b weisen jeweils mindestens ein im Betriebszustand nach unten weisendes Gleit- oder Rollelement 221, 321a, b, hier als Rolle ausgebildet, auf. Die nach unten weisenden Gleit- oder Rollelemente 221, 321a, b liegen im Betriebszustand der Montagetraverse 1 auf der Auflagefläche des oberen Flansches 105b des Turmkopfsegments 105a

Ferner weisen die jeweiligen zweiten Enden 302a, b der zwei Hilfsträger 300a, b jeweils mindestens ein nach außen weisendes Gleit- oder Rollelement 322a, b, hier als Rolle ausgebildet, auf. Die nach außen weisenden Gleit- oder Rollelemente 322a, b liegen im Betriebszustand der Montagetraverse 1 an einer dem Turminneren zugewandten Anlagefläche 105x des oberen Flansches 105b des Turmkopfsegments 105a auf

Das erste und das zweite Ende 201, 202 des Hauptträgers 200 weisen jeweils sich im Betriebszustand nach unten öffnende Führungsflächen 231, 232, 233, 234 auf. Auch die jeweiligen zweiten Enden 302a, b der zwei Hilfsträger 300a, b weisen jeweils mindestens eine sich im Betriebszustand nach unten öffnende Führungsfläche 331a, b auf. Die jeweiligen zweiten Enden 302a, b der zwei Hilfsträger 300a, b weisen jeweils mindestens eine im Betriebszustand nach oben weisende Führungsfläche 332a, b auf.

Die jeweiligen zweiten Enden 302a, b der zwei Hilfsträger 300a, b weisen jeweils ein bewegliches, insbesondere schwenkbar, angeordnetes Tragelement 340a, b auf. An dem Tragelement 340a, b sind vorzugsweise die im Betriebszustand nach oben weisenden Führungsflächen 332a, b und die nach außen weisende Gleit- oder Rollelemente 322a, b angeordnet. Das Tragelement 340a, b ist vorzugsweise über ein Spannnelement 341a, b, wie beispielsweise ein Spannschloss, relativ zum jeweiligen Hilfsträger fixierbar. Die Tragelemente 340a, b können von einer offenen Position (vgl. Figur 19) in eine geschlossene Position (vgl. Fig. 18) und zurück verschwenkt werden.

Die jeweiligen ersten Enden 301a, b der zwei Hilfsträger 300a, b sind mit dem Hauptträger 200 beweglich, insbesondere schwenkbar, verbunden.

Am ersten und das zweiten Ende 201, 202 des Hauptträgers 200 ist vorzugsweise jeweils ein Halteelement 190 angeordnet zur Aufnahme von Funktionselementen, insbesondere eines Hebezeugs, das verwendet werden kann, um die Montagetraverse 1 zu transportieren und zu positionieren.

Am Hauptträger 200 ist vorzugsweise mittig ein Halteelement 192 angeordnet zur Aufnahme von Funktionselementen. Hieran kann vorzugsweise ein Baukorb 193 ins Turminnere abgelassen werden.

Die Montagetraverse 1 weist vorzugsweise eine Abdeckung 99 auf, die zusammen mit der Montagetraverse 1 bewegbar ist. Die Abdeckung 99 weist eine, vorzugsweise zwei- oder mehrteilige, insbesondere flexible, Abdeckhaube 700 und ein Abdeckgestell 600 auf, welches insbesondere ausgebildet ist, die Abdeckhaube 700 zu fixieren.

Das Abdeckgestell 600 weist einen Abdeckring 610 auf, der im hier gezeigten Beispiel vier Teilringe 611, 612, 613, 614 aufweist. Ferner weist das Abdeckgestell 600 einen zentralen Spanndorn 610 mit einem Spannteller 622 auf, wobei der Spannteller zwischen einem unteren Spanndornabschnitt 621 und einem oberen Spanndornabschnitt 623 angeordnet ist.

Das Abdeckgestell 600 weist ferner zwei Spannbügel 630 auf, welche sich jeweils vorzugsweise über mindestens einen Abschnitt des Hauptträgers 200 ausgehend von dessen ersten bzw. zweiten Ende erstrecken. Hierdurch wird der Verfahrweg der Laufkatzen 410, 420 freigehalten, indem die Abdeckhaube 700 durch die Spannbügel entsprechend oberhalb des Hauptträgers 200 abgestützt wird.

Die Abdeckhaube 700 weist vorzugsweise mehrere verschließbare Öffnungen 710, beispielsweise in Form von Reißverschlüssen, auf. Ferner sind an der Abdeckhaube 700 Befestigungselemente 720 in Form von Öffnungen ausgebildet, in die komplementäre Befestigungselemente eingreifen können, mit denen die Abdeckhaube 700 am Abdeckgestell 600 befestigt werden kann.

Ein beispielhaftes Verfahren 1000 zum Einziehen von kabelförmigen Elementen, insbesondere von Spanngliedern 800, entlang eines Turms 102 einer Windenergieanlage kann beispielsweise wie im Folgenden beschrieben ablaufen. Die hier beschriebene Reihenfolge der Verfahrensschritte ist bevorzugt, kann aber auch anders sein.

Zunächst erfolgt ein Aufsetzen 1001 einer Montagetraverse 1 auf einen Turmkopf 105 des Turms 102. Dann erfolgt ein Positionieren 1002 der Montagetraverse 1 an einer gewünschten Umfangsposition. Dies ist beispielsweise in Figur 5 gezeigt, wo zwei Bedienpersonen die Hilfsträger 300a, b an den Handgriffen 90 fassen und die Montagetraverse 1 drehen. Die Bewegung der Montagetraverse in Umfangsrichtung kann auch über einen, vorzugsweise elektrischen, Antrieb erfolgen oder unterstützt werden.

Ist die gewünschte Umfangsposition erreicht, erfolgt das Arretieren 1003 der Montagetraverse 1, insbesondere mittels der Arretierelemente 240 in den Öffnungen des oberen Flansches 105b des Turmkopfsegments 105a.

Dann erfolgt das Anordnen 1004 eines Hebezeugs, beispielsweise einer Winde an der ersten und/oder zweiten Laufkatze 410, 420, gefolgt vom Hochziehen 1005 eines ersten Endes des kabelförmigen Elements, insbesondere des Spannglieds 800, bis zum Turmkopf 105 mittels der Montagetraverse 1, insbesondere mittels eines an einer der Laufkatzen angeordneten Hebezeugs, beispielsweise in Form einer Winde. Es folgt das Anordnen und/oder Fixieren 1006 eines zweiten Endes eines kabelförmigen Elements, insbesondere eines Spannglieds 800, am Turmfuß.

Nach dem Anordnen 1007 einer Spannpresse 530 an der ersten und/oder zweiten Laufkatze 410, 420, erfolgt insbesondere bei Spanngliedern 800 das Vorspannen 1008 des Spannglieds 800 mittels der Spannpresse 530. Schließlich erfolgt ein Fixieren 1009 des ersten Endes des kabelförmigen Elements, insbesondere des Spannglieds 800, am Turmkopf 105.

Insbesondere die Schritte 1002, 1003 und 1006, 1008 und 1009 erfolgen vorzugsweise so oft, wie zum Verspannen sämtlicher Spannglieder 800 eines Turms 102 erforderlich.

## Patentansprüche

1. Montagetraverse (1) zum Aufsetzen auf einen Turmkopf, insbesondere auf einen Turmkopf (105) eines Turms (102) einer Windenergieanlage (100), die Montagetraverse (1) umfassend:
- einen Hauptträger (200) mit einem ersten und einem zweiten Ende (201, 202),
- zwei Hilfsträger (300a, b) mit jeweils einem ersten und einem zweiten Ende (301a, b, 302a, b), wobei die zwei Hilfsträger (300a, b) auf beiden Seiten (200a, b) des Hauptträgers (200) mit ihren jeweiligen ersten Enden (301a, b) jeweils mittig an dem Hauptträger (200) angeordnet sind,
- wobei an dem Hauptträger (200) eine erste Laufkatze (410) entlang mindestens eines ersten Abschnitts (210) des Hauptträgers (200) verfahrbar angeordnet ist,
- wobei an dem Hauptträger (200) eine zweite Laufkatze (420) entlang mindestens eines zweiten Abschnitts (220) des Hauptträgers (200) verfahrbar angeordnet ist,
- **dadurch gekennzeichnet, dass** die erste Laufkatze (410) auf einer Unterseite (200u) des Hauptträgers (200) angeordnet ist und die zweite Laufkatze (420) auf einer Oberseite (200o) des Hauptträgers (200) angeordnet ist.

2. Montagetraverse (1) nach dem vorhergehenden Anspruch,
**dadurch gekennzeichnet, dass** das erste und das zweite Ende (201, 202) des Hauptträgers (200) und die jeweiligen zweiten Enden (302a, b) der zwei Hilfsträger (300a, b) ausgebildet sind, beweglich, insbesondere in Umfangsrichtung beweglich, auf einem Turmkopf (105) angeordnet zu werden.

3. Montagetraverse (1) nach mindestens einem der vorhergehenden Ansprüche,
**dadurch gekennzeichnet, dass** das erste und das zweite Ende (201, 202) des Hauptträgers (200) und/oder die jeweiligen zweiten Enden (302a, b) der zwei Hilfsträger (300a, b) jeweils mindestens ein im Betriebszustand nach unten weisendes Gleit- oder Rollelement (221, 321a, b) aufweisen, und/oder **dadurch gekennzeichnet, dass** die jeweiligen zweiten Enden (302a, b) der zwei Hilfsträger (300a, b) jeweils mindestens ein nach außen weisendes Gleit- oder Rollelement (322a, b) aufweisen.

4. Montagetraverse (1) nach mindestens einem der vorhergehenden Ansprüche,
**dadurch gekennzeichnet, dass** die jeweiligen ersten Enden (301a, b) der zwei Hilfsträger (300a, b) mit dem Hauptträger (200) beweglich, insbesondere schwenkbar, verbunden sind.

5. Montagetraverse (1) nach mindestens einem der vorhergehenden Ansprüche,
**dadurch gekennzeichnet, dass** das erste und das zweite Ende (201, 202) des Hauptträgers (200) und/oder die jeweiligen zweiten Enden (302a, b) der zwei Hilfsträger (300a, b) jeweils mindestens eine sich im Betriebszustand nach unten öffnende Führungsfläche (231, 232, 233, 234, 331a, b) aufweisen, und/oder
**dadurch gekennzeichnet, dass** die jeweiligen zweiten Enden (302a, b) der zwei Hilfsträger (300a, b) jeweils mindestens eine im Betriebszustand nach oben weisende Führungsfläche (332a, b) aufweisen.

6. Montagetraverse (1) nach mindestens einem der vorhergehenden Ansprüche,
**dadurch gekennzeichnet, dass** das erste und das zweite Ende (201, 202) des Hauptträgers (200) und/oder die jeweiligen zweiten Enden (302a, b) der zwei Hilfsträger (300a, b) jeweils mindestens ein Arretierelement (240) zum Arretieren des Hauptträgers (200) an einem Turmkopf (105) aufweisen.

7. Montagetraverse (1) nach mindestens einem der vorhergehenden Ansprüche,
**dadurch gekennzeichnet, dass** die jeweiligen zweiten Enden (302a, b) der zwei Hilfsträger (300a, b) jeweils ein bewegliches, insbesondere schwenkbar, angeordnetes Tragelement (340a, b) aufweisen, an dem vorzugsweise die im Betriebszustand nach oben weisenden Führungsflächen (332a, b) und/oder die nach außen weisende Gleit- oder Rollelemente (322a, b) angeordnet sind.

8. Montagetraverse (1) nach mindestens einem der vorhergehenden Ansprüche,
**dadurch gekennzeichnet, dass** ein Abstand zwischen dem ersten Ende des Hauptträgers und der Mitte (222) des Hauptträgers (200) veränderbar ist, und/oder
**dadurch gekennzeichnet, dass** ein Abstand zwischen dem zweiten Ende des Hauptträgers und der Mitte (222) des Hauptträgers (200) veränderbar ist, und/oder
**dadurch gekennzeichnet, dass** ein Abstand zwischen den jeweiligen zweiten Enden (302a, b) der zwei Hilfsträger (300a, b) und der Mitte (222) des Hauptträgers (200) veränderbar ist

9. Montagetraverse (1) nach mindestens einem der vorhergehenden Ansprüche,
**dadurch gekennzeichnet, dass** der Hauptträger (200) und/oder die zwei Hilfsträger (300a, b) als Teleskopträger ausgebildet sind, und/der
**dadurch gekennzeichnet, dass** das erste und/oder das zweite Ende (201, 202) des Hauptträgers (200) verschiebbar an Verlängerungsabschnitten des Hauptträgers (200) angeordnet und an unterschiedlichen Positionen fixierbar sind und/oder
**dadurch gekennzeichnet, dass** die zweiten Enden (302a, b) der zwei Hilfsträger (300a, b) an Verlängerungsabschnitten der Hilfsträger (300a, b) angeordnet und an unterschiedlichen Positionen fixierbar sind.

10. Montagetraverse (1) nach mindestens einem der vorhergehenden Ansprüche,
**dadurch gekennzeichnet, dass** am ersten und das zweiten Ende (201, 202) des Hauptträgers (200) jeweils ein Halteelement (190) angeordnet ist zur Aufnahme von Funktionselementen, und/oder
**dadurch gekennzeichnet, dass** am Hauptträger (200) mittig ein Halteelement angeordnet ist zur Aufnahme von Funktionselementen, und/oder
**dadurch gekennzeichnet, dass** die erste und/oder die zweite Laufkatze (410, 320) Halteelemente aufweisen zur Aufnahme von Funktionselementen.

11. Montagetraverse (1) nach mindestens einem der vorhergehenden Ansprüche,
**dadurch gekennzeichnet, dass** die erste Laufkatze (410) zwischen dem ersten Ende (201) des Hauptträgers (200) und einer Mitte (222) des Hauptträgers (200) angeordnet ist und die zweite Laufkatze (420) zwischen dem zweiten Ende (202) des Hauptträgers (200) und der Mitte (222) des Hauptträgers (200) angeordnet ist; und/oder
**dadurch gekennzeichnet, dass** beide Laufkatzen (410, 420) zwischen dem ersten Ende (201) des Hauptträgers (200) und einer Mitte (222) des Hauptträgers (200) angeordnet sind; und/oder
**dadurch gekennzeichnet, dass** die erste und/oder die zweite Laufkatze (410, 420) lösbar an dem Hauptträger (200) angeordnet ist, und/oder
**dadurch gekennzeichnet, dass** die erste und/oder die zweite Laufkatze (420, 420) an mindestens zwei unterschiedlichen Positionen an dem Hauptträger (200) positionierbar sind.

12. Montagetraverse (1) nach mindestens einem der vorhergehenden Ansprüche,
**gekennzeichnet durch** eine Abdeckung (99), wobei vorzugsweise die Abdeckung (99) eine, vorzugsweise zwei- oder mehrteilige, insbesondere flexible, Abdeckhaube (700) und ein Abdeckgestell (600) aufweist, welches insbesondere ausgebildet ist, die Abdeckhaube zu fixieren.

13. Montagetraverse (1) nach mindestens einem der vorhergehenden Ansprüche,
**dadurch gekennzeichnet, dass** das Abdeckgestell (600) einen, vorzugsweise vierteiligen Abdeckring (610) aufweist, und/oder
**dadurch gekennzeichnet, dass** das Abdeckgestell (600) einen zentralen Spanndorn (610), vorzugsweise mit einem Spannteller (622) aufweist, und/oder
**dadurch gekennzeichnet, dass** das Abdeckgestell (600) zwei Spannbügel (630), welche sich jeweils vorzugsweise über mindestens einen Abschnitt des Hauptträgers (200) ausgehend von dessen ersten bzw. zweiten Ende erstrecken, aufweist.

14. Verfahren (1000) zum Einziehen von kabelförmigen Elementen, insbesondere von Spanngliedern (800), entlang eines Turms, insbesondere eines Turms (102) einer Windenergieanlage,
das Verfahren umfassend:
- Aufsetzen (1001) einer Montagetraverse (1) nach mindestens einem der vorhergehenden Ansprüche auf einen Turmkopf (105) des Turms (102),
- Anordnen (1004) eines Hebezeugs an der ersten und/oder zweiten Laufkatze (410, 420),
- Hochziehen (1005) eines ersten Endes des kabelförmigen Elements bis zum Turmkopf (105) mittels der Montagetraverse (1).

15. Verfahren (1000) nach dem vorhergehenden Anspruch, wobei das kabelförmige Element ein Spannglied (800) ist,
das Verfahren umfassend:
- Positionieren (1002) der Montagetraverse (1) an einer gewünschten Umfangsposition, und/oder
- Arretieren (1003) der Montagetraverse (1), und/oder
- Anordnen und/oder Fixieren (1006) eines zweiten Endes des Spannglieds (800) am Turmfuß, und/oder
- Anordnen (1007) einer Spannpresse (530) an der ersten und/oder zweiten Laufkatze (410, 420), und/oder
- Vorspannen (1008) des Spannglieds (800) mittels der Spannpresse (530), und/oder
- Fixieren (1009) des ersten Endes des Spannglieds (800) am Turmkopf (105).

## Claims

1. An assembly crossbeam (1) for placing on a tower top, in particular on a tower top (105) of a tower (102) of a wind turbine (100), the assembly crossbeam (1) comprising:
- a main girder (200) having a first and a second end (201, 202),
- two auxiliary girders (300a, b), each having a first and a second end (301a, b, 302a, b), wherein the two auxiliary girders (300a, b) are positioned on either side (200a, b) of the main girder (200) with their respective first ends (301a, b) at the center of the main girder (200),
- wherein a first trolley (410) is arranged on the main girder (200) so as to be movable along at least a first portion (210) of the main girder (200),
- wherein a second trolley (420) is arranged on the main girder (200) so as to be movable along at least a second portion (220) of the main girder (200)
- **characterized in that** the first trolley (410) is arranged on an underside (200u) of the main girder (200) and the second trolley (420) is arranged on a top side (200o) of the main girder (200).

2. The assembly crossbeam (1) as claimed in the preceding claim, **characterized in that** the first and the second ends (201, 202) of the main girder (200) and the respective second ends (302a, b) of the two auxiliary girders (300a, b) are designed to be arranged on a tower top (105) so as to be movable, in particular movable in the circumferential direction.

3. The assembly crossbeam (1) as claimed in at least one of the preceding claims,
**characterized in that** the first and the second ends (201, 202) of the main girder (200) and/or the respective second ends (302a, b) of the two auxiliary girders (300a, b) each have at least one sliding or rolling element (221, 321a, b) which points downward in the operating state, and/or
**characterized in that** the respective second ends (302a, b) of the two auxiliary girders (300a, b) each have at least one outward-pointing sliding or rolling element (322a, b).

4. The assembly crossbeam (1) as claimed in at least one of the preceding claims,
**characterized in that** the respective first ends (301a, b) of the two auxiliary girders (300a, b) are connected movably, in particular pivotably, to the main girder (200).

5. The assembly crossbeam (1) as claimed in at least one of the preceding claims,
**characterized in that** the first and second ends (201, 202) of the main girder (200) and/or the respective second ends (302a, b) of the two auxiliary girders (300a, b) each have at least one guide face (231, 232, 233, 234, 331a, b) which opens at the bottom in the operating state, and/or
**characterized in that** the respective second ends (302a, b) of the two auxiliary girders (300a, b) each have at least one guide face (332a, b) which points upward in the operating state.

6. The assembly crossbeam (1) as claimed in at least one of the preceding claims,
**characterized in that** the first and second ends (201, 202) of the main girder (200) and/or the respective second ends (302a, b) of the two auxiliary girders (300a, b) each have at least one locking element (240) for locking the main girder (200) on a tower top (105).

7. The assembly crossbeam (1) as claimed in at least one of the preceding claims,
**characterized in that** the respective second ends (302a, b) of the two auxiliary girders (300a, b) each have a movable, in particular pivotably arranged support element (340a, b) on which preferably the guide faces (332a, b) which point upward in operating state and/or the outward-pointing sliding or rolling elements (322a, b) are arranged.

8. The assembly crossbeam (1) as claimed in at least one of the preceding claims,
**characterized in that** a distance between the first end of the main girder and the center (222) of the main girder (200) is variable, and/or
**characterized in that** a distance between the second end of the main girder and the center (222) of the main girder (200) is variable, and/or
**characterized in that** a distance between the respective second ends (302a, b) of the two auxiliary girders (300a, b) and the center (222) of the main girder (200) is variable.

9. The assembly crossbeam (1) as claimed in at least one of the preceding claims,
**characterized in that** the main girder (200) and/or the two auxiliary girders (300a, b) are configured as telescopic girders, and/or
**characterized in that** the first and/or the second ends (201, 202) of the main girder (200) are arranged so as to be displaceable on extension portions of the main girder (200) and can be fixed at different positions, and/or
**characterized in that** the second ends (302a, b) of the two auxiliary girders (300a, b) are arranged on extension portions of the auxiliary girders (300a, b) and can be fixed at different positions.

10. The assembly crossbeam (1) as claimed in at least one of the preceding claims,
**characterized in that** a holding element (190) is arranged at each of the first and second ends (201, 202) of the main girder (200) for receiving function elements, and/or
**characterized in that** a holding element is arranged centrally on the main girder (200) for receiving function elements, and/or
**characterized in that** the first and/or the second trolley (410, 320) has holding elements for receiving function elements.

11. The assembly crossbeam (1) as claimed in at least one of the preceding claims,
**characterized in that** the first trolley (410) is arranged between the first end (201) of the main girder (200) and a center (222) of the main girder (200), and the second trolley (420) is arranged between the second end (202) of the main girder (200) and the center (222) of the main girder (200); and/or
**characterized in that** both trolleys (410, 420) are arranged between the first end (201) of the main girder (200) and a center (222) of the main girder (200); and/or
**characterized in that** the first and/or the second trolley (410, 420) is releasably arranged on the main girder (200), and/or
**characterized in that** the first and/or the second trolley (420, 420) is positionable in at least two different positions on the main girder (200).

12. The assembly crossbeam (1) as claimed in at least one of the preceding claims,
**characterized by** a cover (99), wherein preferably the cover (99) has a preferably two-piece or multipiece, in particular flexible cover hood (700), and a cover frame (600) which in particular is configured for fixing the cover hood.

13. The assembly crossbeam (1) as claimed in at least one of the preceding claims,
**characterized in that** the cover frame (600) has a preferably four-piece cover ring (10), and/or
**characterized in that** the cover frame (600) has a central clamping mandrel (610), preferably with a clamping plate (622), and/or
**characterized in that** the cover frame (600) has two clamping brackets (630), which each extend preferably over at least a portion of the main girder (200) starting from its first or second end respectively.

14. A method (1000) for drawing in cable-like elements, in particular tendons (800), along a tower, in particular a tower (102) of a wind turbine,
the method comprising:
- placing (1001) an assembly crossbeam (1) as claimed in at least one of the preceding claims on a tower top (105) of the tower (102),
- arranging (1004) a lifting tool on the first and/or second trolley (410, 420),
- pulling (1005) a first end of the cable-like element up to the tower top (105) by means of the assembly crossbeam (1).

15. The method (1000) as claimed in the preceding claim, wherein the cable-like element is a tendon (800),
the method comprising:
- positioning (1002) the assembly crossbeam (1) at a desired circumferential position, and/or
- locking (1003) the assembly crossbeam (1), and/or
- arranging and/or fixing (1006) a second end of the tendon (800) to the tower base, and/or
- arranging (1007) a prestressing jack (530) on the first and/or second trolley (410, 420), and/or
- prestressing (1008) the tendon (800) by means of the prestressing jack (530), and/or
- fixing (1009) the first end of the tendon (800) to the tower top (105).

## Revendications

1. Traverse de montage (1) à mettre en place sur une tête de tour, en particulier sur une tête de tour (105) d'une tour (102) d'une éolienne (100), la traverse de montage (1) comprenant :
- un support principal (200) avec une première et une deuxième extrémité (201, 202),
- deux supports auxiliaires (300a, b) avec respectivement une première et une deuxième extrémité (301a, b, 302a, b), dans laquelle les deux supports auxiliaires (300a, b) sont disposés sur les deux faces (200a, b) du support principal (200) avec leurs premières extrémités (301a, b) respectives respectivement de manière centrale sur le support principal (200),
- dans laquelle un premier chariot roulant (410) est disposé sur le support principal (200) de manière à pouvoir se déplacer le long d'au moins une première partie (210) du support principal (200),
- dans laquelle un deuxième chariot roulant (420) est disposé sur le support principal (200) de manière à pouvoir se déplacer le long d'au moins une deuxième partie (220) du support principal (200),
- **caractérisée en ce que** le premier chariot roulant (410) est disposé sur une face inférieure (200u) du support principal (200) et le deuxième chariot roulant (420) est disposé sur une face supérieure (200o) du support principal (200).

2. Traverse de montage (1) selon la revendication précédente,
**caractérisée en ce que** la première et la deuxième extrémité (201, 202) du support principal (200) et les deuxièmes extrémités (302a, b) respectives des deux supports auxiliaires (300a, b) sont réalisées pour être disposées sur une tête de tour (105) de manière mobile, en particulier de manière mobile dans la direction périphérique.

3. Traverse de montage (1) selon au moins l'une des revendications précédentes,
**caractérisée en ce que** la première et la deuxième extrémité (201, 202) du support principal (200) et/ou les deuxièmes extrémités (302a, b) respectives des deux supports auxiliaires (300a, b) présentent respectivement au moins un élément glissant ou roulant (221, 321a, b) dirigé vers le bas dans l'état de fonctionnement, et/ou
**caractérisée en ce que** les deuxièmes extrémités (302a, b) respectives des deux supports auxiliaires (300a, b) présentent respectivement au moins un élément glissant ou roulant (322a, b) dirigé vers l'extérieur.

4. Traverse de montage (1) selon au moins l'une des revendications précédentes,
**caractérisée en ce que** les premières extrémités (301a, b) respectives des deux supports auxiliaires (300a, b) sont reliées au support principal (200) de manière mobile, en particulier de manière pivotante.

5. Traverse de montage (1) selon au moins l'une des revendications précédentes,
**caractérisée en ce que** la première et la deuxième extrémité (201, 202) du support principal (200) et/ou les deuxièmes extrémités (302a, b) respectives des deux supports auxiliaires (300a, b) présentent respectivement au moins une surface de guidage (231, 232, 233, 234, 331a, b) s'ouvrant vers le bas dans l'état de fonctionnement, et/ou
**caractérisée en ce que** les deuxièmes extrémités (302a, b) respectives des deux supports auxiliaires (300a, b) présentent respectivement au moins une surface de guidage (332a, b) dirigée vers le haut dans l'état de fonctionnement.

6. Traverse de montage (1) selon au moins l'une des revendications précédentes,
**caractérisée en ce que** la première et la deuxième extrémité (201, 202) du support principal (200) et/ou les deuxièmes extrémités (302a, b) respectives des deux supports auxiliaires (300a, b) présentent respectivement au moins un élément de blocage (240) pour bloquer le support principal (200) sur une tête de tour (105).

7. Traverse de montage (1) selon au moins l'une des revendications précédentes,
**caractérisée en ce que** les deuxièmes extrémités (302a, b) respectives des deux supports auxiliaires (300a, b) présentent respectivement un élément porteur (340a, b) disposé de manière mobile, en particulier de manière pivotante, sur lequel sont disposées de préférence les surfaces de guidage (332a, b) dirigées vers le haut dans l'état de fonctionnement et/ou les éléments glissants ou roulants (322a, b) dirigés vers l'extérieur.

8. Traverse de montage (1) selon au moins l'une des revendications précédentes,
**caractérisée en ce qu'**une distance entre la première extrémité du support principal et le centre (222) du support principal (200) peut être modifiée,
et/ou
**caractérisée en ce qu'**une distance entre la deuxième extrémité du support principal et le centre (222) du support principal (200) peut être modifiée,
et/ou
**caractérisée en ce qu'**une distance entre les deuxièmes extrémités (302a, b) respectives des deux supports auxiliaires (300a, b) et le centre (222) du support principal (200) peut être modifiée.

9. Traverse de montage (1) selon au moins l'une des revendications précédentes,
**caractérisée en ce que** le support principal (200) et/ou les deux supports auxiliaires (300a, b) sont réalisés en tant que support télescopique, et/ou
**caractérisée en ce que** la première et/ou la deuxième extrémité (201, 202) du support principal (200) sont disposées de manière coulissante sur des parties de prolongement du support principal (200) et peuvent être fixées dans différentes positions et/ou
**caractérisée en ce que** les deuxièmes extrémités (302a, b) des deux supports auxiliaires (300a, b) sont disposées sur des parties de prolongement des supports auxiliaires (300a, b) et peuvent être fixées dans différentes positions.

10. Traverse de montage (1) selon au moins l'une des revendications précédentes,
**caractérisée en ce que** respectivement un élément de retenue (190) pour la réception d'éléments fonctionnels est disposé sur la première et la deuxième extrémité (201, 202) du support principal (200), et/ou
**caractérisée en ce qu'**un élément de retenue pour la réception d'éléments fonctionnels est disposé de manière centrale sur le support principal (200), et/ou
**caractérisée en ce que** le premier et/ou le deuxième chariot roulant (410, 320) présente(nt) des éléments de retenue pour la réception d'éléments fonctionnels.

11. Traverse de montage (1) selon au moins l'une des revendications précédentes,
**caractérisée en ce que** le premier chariot roulant (410) est disposé entre la première extrémité (201) du support principal (200) et un milieu (222) du support principal (200) et le deuxième chariot roulant (420) est disposé entre la deuxième extrémité (202) du support principal (200) et le milieu (222) du support principal (200) ; et/ou
**caractérisée en ce que** les deux chariots roulants (410, 420) sont disposés entre la première extrémité (201) du support principal (200) et un milieu (222) du support principal (200) ; et/ou
**caractérisée en ce que** le premier et/ou le deuxième chariot roulant (410, 420) est disposé de manière détachable sur le support principal (200), et/ou
**caractérisée en ce que** le premier et/ou le deuxième chariot roulant (420, 420) peuvent être positionnés dans au moins deux positions différentes sur le support principal (200).

12. Traverse de montage (1) selon au moins l'une des revendications précédentes,
**caractérisée par** un couvercle (99), dans laquelle de préférence le couvercle (99) présente un capot de recouvrement (700), de préférence en deux parties ou plus, en particulier flexible, et un châssis de recouvrement (600), lequel est réalisé en particulier pour fixer le capot de recouvrement.

13. Traverse de montage (1) selon au moins l'une des revendications précédentes,
**caractérisée en ce que** le châssis de recouvrement (600) présente une bague de recouvrement (610) de préférence en quatre parties, et/ou
**caractérisée en ce que** le châssis de recouvrement (600) présente un mandrin de serrage central (610), de préférence avec un disque de serrage (622), et/ou
**caractérisée en ce que** le châssis de recouvrement (600) présente deux étriers de serrage (630), lesquels s'étendent respectivement de préférence au-dessus d'au moins une partie du support principal (200) en partant de la première ou deuxième extrémité de celle-ci.

14. Procédé (1000) pour introduire des éléments en forme de câble, en particulier des organes de serrage (800), le long d'une tour, en particulier d'une tour (102) d'une éolienne,
le procédé comprenant :
- la mise en place (1001) d'une traverse de montage (1) selon au moins l'une des revendications précédentes sur une tête de tour (105) de la tour (102),
- la disposition (1004) d'un engin de levage sur le premier et/ou deuxième chariot roulant (410, 420),
- le levage (1005) d'une première extrémité de l'élément en forme de câble jusqu'à la tête de tour (105) au moyen de la traverse de montage (1).

15. Procédé (1000) selon la revendication précédente, dans lequel l'élément en forme de câble est un élément de serrage (800),
le procédé comprenant :
- le positionnement (1002) de la traverse de montage (1) dans une position périphérique souhaitée, et/ou
- le blocage (1003) de la traverse de montage (1), et/ou
- la disposition et/ou fixation (1006) d'une deuxième extrémité de l'organe de serrage (800) sur le pied de tour, et/ou
- la disposition (1007) d'une presse de serrage (530) sur le premier et/ou deuxième chariot roulant (410, 420), et/ou
- la précontrainte (1008) de l'organe de serrage (800) au moyen de la presse de serrage (530), et/ou
- la fixation (1009) de la première extrémité de l'organe de serrage (800) sur la tête de tour (105).
